(19) **Europäisches Patentamt**
**European Patent Office**
**Office européen des brevets**

(11) **EP 4 745 622 A1**

(12) **EUROPEAN PATENT APPLICATION**

(43) Date of publication:
20.05.2026 Bulletin 2026/21

(21) Application number: 25215400.0

(22) Date of filing: 12.11.2025

(51) International Patent Classification (IPC):
*G01S 7/487* (2006.01)    *G01S 7/4865* (2020.01)
*G01S 17/10* (2020.01)    *G01S 7/497* (2006.01)

(52) Cooperative Patent Classification (CPC):
**G01S 7/487; G01S 7/4866; G01S 7/4876;**
**G01S 7/497; G01S 17/10**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **19.11.2024 US 202418952453**

(71) Applicant: **STMicroelectronics International N.V.**
**1228 Plan-les-Ouates, Geneva (CH)**

(72) Inventors:
• **BAXTER, Donald**
**STIRLING, FK7 8PZ (GB)**
• **MELLOT, Pascal**
**38250 LANS EN VERCORS (FR)**
• **MCLEOD, Stuart**
**EDINBURGH, EH128QF (GB)**
• **ASSMANN, Andreas**
**EDINBURGH, EH91NQ (GB)**

(74) Representative: **Cabinet Beaumont**
**4, Place Robert Schuman**
**B.P. 1529**
**38025 Grenoble Cedex 1 (FR)**

(54) **ULTRA-LEAN TIME-OF-FLIGHT HISTOGRAM PROCESSING**

(57)     According to an embodiment, a time-of-flight sensor system includes a light emitter, a detector array, and a histogram processing circuit. The histogram processing circuit processes time-of-flight measurement data using sequential bin-by-bin histogram processing. This approach enables efficient processing with minimal memory requirements, suitable for low-power applications. The circuit applies on-the-fly operations during processing, including crosstalk removal and peak detection. A correlator circuit within the system uses multiply-accumulate (MAC) circuits to calculate ambient light contribution, perform main correlation, and compute crosstalk contribution in a bin-serial manner. Additionally, a phase/bin computation circuit applies filter coefficients to preprocessed histogram data and detects positive zero crossings to calculate the median phase.

FIG. 2

**Description**

**TECHNICAL FIELD**

The present disclosure generally relates to time-of-flight sensor technology and, in particular embodiments, to ultra-lean histogram processing architectures for time-of-flight sensors.

**BACKGROUND**

Time-of-flight (ToF) technology has become increasingly prevalent in various applications, including robotics, automotive systems, and consumer electronics. ToF systems measure the time light travels from an emitter to an object and back to a sensor, enabling distance measurements and three-dimensional environment mapping.

ToF sensors have gained popularity in mobile devices for applications such as facial recognition, augmented reality, and camera autofocus systems. These sensors may employ direct or indirect ToF methods. Direct ToF systems measure the actual time of light travel, while indirect ToF systems measure phase shifts in modulated light signals.

Direct ToF systems often utilize Single Photon Avalanche Diodes (SPADs) as detectors due to their high sensitivity and ability to detect individual photons. These systems generate histograms of photon arrival times, which are processed to determine distance information. The histogram data contains information about the reflected light pulse, including its shape, intensity, and timing.

As ToF technology advances, there is interest in integrating it into a wider range of devices, including those with power and size constraints. This has led to efforts in developing ToF systems that can operate within the power budgets of battery-powered devices while maintaining accuracy and performance.

Histogram processing is a component in direct ToF systems. It involves analyzing collected photon timing data to extract distance information. This processing may include noise reduction, peak detection, and phase calculation. The complexity of these operations can vary depending on application requirements and environmental conditions, such as the presence of multiple reflecting surfaces or ambient light interference.

Approaches to histogram processing in ToF systems may rely on general-purpose microcontrollers or digital signal processors to perform computations. These methods can provide flexibility but may also present considerations regarding power consumption, processing speed, and integration within compact device form factors.

ToF systems may include a vertical-cavity surface-emitting laser (VCSEL) as a light source, emitting short light pulses. Typically, an array of SPADs detects the reflected light. The time difference between the emission and detection of light pulses is used to calculate the distance to the reflecting object.

Crosstalk can occur in ToF systems when light from the emitter is reflected internally within the sensor package or phone housing before reaching the detector. This can lead to erroneous distance measurements. Crosstalk mitigation techniques may be employed to reduce these effects and improve measurement accuracy.

Multiple target detection is another consideration in ToF systems. In some scenarios, the emitted light pulse may be reflected by multiple objects at different distances. Processing techniques may be employed to distinguish between these multiple reflections and determine the distances to different objects in the scene.

Power management is important to ToF sensor design, particularly for battery-powered devices. This can involve optimizing the light emission, detection, and processing stages to minimize overall power consumption while maintaining the desired performance characteristics.

Integration of ToF sensors with other system components, such as application processors or image signal processors, can provide opportunities for enhanced functionality and efficiency. The integration may involve considerations of data transfer, processing distribution, and overall system architecture.

Further, conventional time-of-flight systems rely on substantial memory resources to store and process histogram data. The systems typically use general-purpose microcontrollers or digital signal processors with ample RAM to hold multiple copies of histogram data for various processing stages. However, the use of large memory banks becomes prohibitive in applications where power consumption, cost, and size can be critical factors, such as in battery-powered devices or compact mobile electronics.

**SUMMARY**

Technical advantages are generally achieved by embodiments of this disclosure, which describe ultra-lean histogram processing architectures for time-of-flight sensors.

A first aspect relates to a time-of-flight sensor system, comprising a light emitter configured to emit light pulses towards a target; a detector array configured to detect reflected light pulses from the target; and a histogram processing circuit coupled to the detector array and configured to: receive time-of-flight measurement data from the detector array, process measurement data from the detector array using a sequential bin-by-bin histogram processing, and apply, during the sequential bin-by-bin histogram processing, one or more on-the-fly operations.

A second aspect relates to a method for processing time-of-flight sensor data, the method comprising: emitting light pulses towards a target; detecting reflected light pulses from the target; receiving time-of-flight measurement data based on the detected reflected light pulses; processing the time-of-flight measurement data using sequential bin-by-bin histogram processing, wherein the sequential bin-by-bin histogram processing comprises sequentially processing individual bins of a histogram, maintaining a state of a predetermined number of most recently processed bins, and generating output data for each bin before proceeding to a subsequent bin; and applying, during the sequential bin-by-bin histogram processing, one or more on-the-fly operations.

A third aspect relates to a correlator circuit for a time-of-flight sensor system configured to process input data in a bin-serial manner, the correlator circuit comprising: an ambient multiply-accumulate (MAC) circuit configured to calculate an ambient light contribution; a filter MAC circuit configured to perform a main correlation operation on input histogram data; a crosstalk MAC circuit configured to compute a crosstalk contribution; a closest target circuit coupled to the filter MAC circuit and configured to determine a closest detected target; and a strongest maximum circuit coupled to the filter MAC circuit and configured to identify a peak with a highest signal-to-noise ratio (SNR).

A fourth aspect relates to a method for processing an input histogram data of a time-of-flight sensor, the method comprising processing the input histogram data in a bin-serial manner, the processing including: calculating an ambient light contribution; performing a main correlation operation on the input histogram data; computing a crosstalk contribution; determining a closest detected target based on results of the main correlation operation; and identifying a peak with a highest signal-to-noise ratio (SNR) based on results of the main correlation operation.

A fifth aspect relates to a phase/bin computation circuit for a time-of-flight sensor system, the phase/bin computation circuit comprising: a filter multiply-accumulate (MAC) circuit configured to apply filter coefficients to preprocessed histogram data within defined search and pulse windows; and a positive zero crossing detection circuit coupled to the filter MAC circuit and configured to: detect a positive zero crossing in filtered data output by the filter MAC circuit, store current and previous filter values upon detection of the positive zero crossing, and output a found median flag and a median bin location, wherein the phase/bin computation circuit is configured to: process input data in a bin-serial manner, and calculate a median phase by interpolating a current filter value and a previous filter value.

A sixth aspect relates to a method for processing time-of- flight sensor data, the method comprising: receiving preprocessed histogram data; applying filter coefficients to the preprocessed histogram data within defined search and pulse windows to generate a filtered histogram data; processing the filtered histogram data in a bin-serial manner; detecting a positive zero crossing in the filtered histogram data; storing current and previous filter values in response to detecting the positive zero crossing; outputting a found median flag and a median bin location; and calculating a median phase by interpolating the current and previous filter values.

Embodiments can be implemented in hardware, software, or any combination thereof.

## BRIEF DESCRIPTION OF THE DRAWINGS

For a more complete understanding of the present disclosure and the advantages thereof, reference is now made to the following descriptions taken in conjunction with the accompanying drawings, in which:

Figure 1 is a block diagram of an embodiment time-of-flight (ToF) sensor system;

Figure 2 is a block diagram of an embodiment histogram processing circuit;

Figure 3 is a flowchart of an embodiment method for generating the crosstalk calibration data;

Figure 4 is a block diagram of an embodiment correlator circuit;

Figure 5 is a flowchart of an embodiment method for processing ToF sensor input data in a bin-serial manner;

Figure 6 is a block diagram of an embodiment phase/bin computation circuit; and

Figure 7 is a flowchart of an embodiment method for on-the-fly median estimation of a potential target using, for example, a lean pulse weighted histogram approach.

## DETAILED DESCRIPTION OF ILLUSTRATIVE EMBODIMENTS

This disclosure provides many applicable inventive concepts that can be embodied in a wide variety of specific contexts. The particular embodiments are merely illustrative of specific configurations and do not limit the scope of the claimed embodiments. Features from different embodiments may be combined to form further embodiments unless noted otherwise. Various embodiments are illustrated in the accompanying drawing figures, where identical components and elements are identified by the same reference number, and repetitive descriptions are omitted for brevity.

Variations or modifications described in one of the embodiments may also apply to others. Further, various changes, substitutions, and alterations can be made herein without departing from the spirit and scope of this disclosure as defined by the appended claims.

While the inventive aspects are described primarily in the context of time-of-flight (ToF) sensors for mobile devices, it should also be appreciated that these inventive aspects may also apply to other types of distance measurement systems and applications. In particular, aspects of this disclosure may similarly apply to LiDAR systems, structured light 3D scanners, automotive driver assistance systems, industrial automation systems, and gesture recognition devices.

Further, the disclosed techniques can be particularly suitable for battery-powered applications such as automatic faucets or water dispensers in hygienic settings, mobile phone cameras for autofocus and facial recognition, and other autonomous ranging devices that require long-term operation on battery power. The system's efficiency and compact design also make it applicable to various consumer electronics where size and power constraints are critical factors.

Embodiments of the disclosure relate to a hardware architecture for histogram processing in time-of-flight (ToF) sensors. The architecture includes a modular hardware processing unit comprising individual hardware processing circuits that enable ultra-low-power full histogram processing at the sensor level. The proposed architecture allows on-chip processing in a direct ToF sensor while maintaining low power consumption targets.

In embodiments, the hardware processing unit incorporates custom peak finder circuits with multi-purpose multiply-accumulate (MAC) circuits. While the current implementation of the custom peak finder outputs the strongest and closest target outputs from full histogram data, the architecture is extensible to support detection of additional targets per histogram. The MAC circuits can be shared across various hardware circuits to enable full histogram processing. The architecture includes a correlator-based matched filter approach compatible with multiple pulse widths and ranging mode options, adapting to close, medium, or long-range applications while maintaining consistent memory requirements.

The correlator implements a closest edge finding algorithm alongside the custom peak finder, operating on the rising edge of the histogram data. The implementation enables robust ranging of the nearest target with pile-up mitigation. By retaining full histogram processing capabilities, effective crosstalk mitigation can be applied. Optionally, a full histogram bypass mode is available, allowing for off-chip processing on a host device if desired.

The architecture can incorporate an ultra-efficient crosstalk shape approximation and removal process in the histogram data, including the implementation of adaptive crosstalk shape updates. Additionally, the architecture can extend the histogram calculation with a robust fallback option, enabling consistent ranging in challenging scenarios, such as providing a median range output in cases of merged target clusters.

Embodiments of the disclosure aim to reduce power consumption, achieve a compact design with lower area requirements, increase integration potential, reduce overall cost, and target an extremely low gate/logic count. These goals can be achieved through custom hardware circuits, shared MAC circuits, specific look-up table (LUT) memory circuits, and minimal memory usage throughout the processing pipeline.

In embodiments, the proposed architecture adapts and evolves existing approaches for a minimal logic footprint and introduces discrete hardware circuits to enable robust performance with the closest and strongest peak-finding options. The approach allows for efficient implementation of full histogram processing capabilities within the sensor, reducing the need for external processing and minimizing power consumption.

The modular approach of the hardware processing circuit allows for flexibility in addressing various ranging scenarios. For example, the correlator-based matched filter approach can be configured for three pulse widths and three different ranging mode options, making it adaptable to close, medium, or long-range applications while maintaining consistent memory requirements. The versatility enables the ToF sensor to perform effectively across a wide range of use cases without compromising efficiency or accuracy.

Embodiments of the present disclosure address the challenges of implementing highperformance time-of-flight sensing under extreme memory constraints. The disclosed system operates without dedicated RAM, relying on a small selection of registers and buffers for temporary data storage.

The histogram processing circuit can be configured to function efficiently with minimal memory resources. Instead of storing full histograms or multiple copies of processed data, the system employs a bin-serial processing approach. The method allows for the processing of histogram data in a streaming fashion, significantly reducing memory requirements.

In embodiments, the system's microcontroller unit (MCU) functions primarily as a sequencer, with limited local storage in the form of registers. The choice eliminates the need for a separate memory system, reducing power consumption and chip area. The architecture can be optimized to minimize memory accesses, as each memory fetch operation consumes multiple clock cycles and power.

By implementing these memory-efficient techniques, the system achieves full histogram processing capabilities comparable to more resource-intensive solutions while maintaining ultra-low power consumption suitable for integration into battery-powered devices. These and additional details are further detailed below.

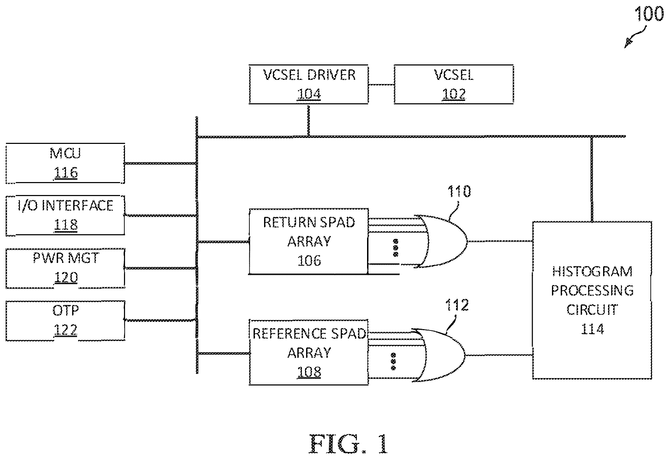

Figure 1 illustrates a block diagram of an embodiment time-of-flight (ToF) sensor system 100. ToF sensor system 100 includes a vertical-cavity surface-emitting laser (VCSEL) 102, a VCSEL driver 104, a return single-photon avalanche diode (SPAD) array 106, a reference SPAD array 108, a first OR tree 110, a second OR tree 112, a histogram processing circuit 114, a microcontroller unit (MCU) 116, an input/output (I/O) interface 118, a power management circuit 120, and a one-time programmable (OTP) memory 122, which may (or may not) be arranged as shown.

ToF sensor system 100 may include additional components not shown, such as a cover glass positioned over the VCSEL 102, the return SPAD array 106, and the reference SPAD array 108. The cover glass can protect the optical components from environmental factors and reduce unwanted light scattering within the ToF sensor system 100.

The VCSEL 102 emits light pulses that are directed toward a target object. The VCSEL driver 104 is coupled to the VCSEL 102 and controls the timing and intensity of the emitted light pulses. The return SPAD array 106 detects the reflected light pulses from the target object, while the reference SPAD array 108 detects a portion of the emitted light pulse directly from the VCSEL 102.

The first OR tree 110 is coupled to the return SPAD array 106 and combines the signals from multiple SPADs in the return array. Similarly, the second OR tree 112 is coupled to the reference SPAD array 108 and combines the signals from multiple SPADs in the reference array. The first OR tree 110 and the second OR tree 112 can help reduce the number of signal lines and simplify subsequent processing.

The histogram processing circuit 114 is coupled to the first OR tree 110 and the second OR tree 112. It processes the combined signals from the return SPAD array 106 and the reference SPAD array 108 to generate histogram data representing the time-of-flight measurements. The histogram processing circuit 114 can include various sub-circuits, such as a correlator circuit, histogram circuit, a range calculator circuit, and a rate calculation circuit, as further detailed below.

The MCU 116 is coupled to the VCSEL driver 104, the return SPAD array 106, the reference SPAD array 108, and the histogram processing circuit 114. The MCU 116 can perform additional processing on the histogram data, control various system components, manage overall system operation, and provide timing and control signals for the detection process.

The I/O interface 118 is coupled to the MCU 116 and communicates with external devices or systems. The power management circuit 120 is coupled to various system components and manages power distribution and consumption.

The OTP memory 122 can store calibration data, system parameters, and other non-volatile information used by the ToF sensor system 100. It can be programmed during manufacturing or initial setup and retain data even when power is removed.

In embodiments, ToF sensor system 100 includes a histogram bypass mode (i.e., bypassing the histogram processing circuit 114), allowing raw histogram data to be sent off-chip for processing on a host device, providing flexibility for applications requiring more complex or custom processing algorithms.

Conventional solutions for time-of-flight (ToF) sensor histogram processing typically involve utilizing full histogram processing with a powerful off-chip microcontroller unit (MCU). Off-chip processing typically involves several steps, including crosstalk estimation and compensation, pulse segmentation (i.e., an iterative process per histogram), and phase estimation for non-ideal pulse shapes.

On-chip processing presents several drawbacks, such as necessitating a large MCU in the sensor package, which consumes significant power and increases read-out complexity. Even when idle, such MCUs require a minimum amount of power, leading to increased standby power draw. Additionally, the higher complexity algorithms employed in these solutions require longer run times for the same clock frequency, increasing power consumption.

Moreover, using larger MCUs and complex processing algorithms results in a larger silicon area for the overall system. The increased area has cascading effects, including higher module costs, larger module sizes, and increased power requirements. These factors make integrating such ToF sensors into compact, power-constrained devices such as mobile phones or wearables challenging.

Further, the complexity of conventional solutions can limit their scalability and adaptability to different ranging scenarios. The iterative processes involved in pulse segmentation and phase estimation may be optimal for some use cases, particularly in environments with rapidly changing conditions or multiple reflecting surfaces.

These drawbacks highlight the need for more efficient, compact, and power-conscious approaches to ToF sensor histogram processing. Embodiments of the present disclosure aim to address these limitations by providing architectures that reduce power consumption, decrease silicon area, and maintain or improve performance across various ranging scenarios.

Advantageously, ToF sensor system 100 can detect and process multiple targets, adapting to various environmental conditions, including ambient light interference. It can operate in different ranging modes, adapting to close, medium, or long-range applications while maintaining consistent memory requirements.

ToF sensor system 100 addresses constraints typical in mobile and battery-powered applications, including power, size, cost, resources, I/O bandwidth, and limited power budgets. The compact and efficient design, featuring integrated on-chip processing capabilities, helps overcome the package size limitations often encountered in 3D imagers.

Histogram processing circuit 114 minimizes the required logic, memory usage, and runtime (computational cycles) for histogram processing while maintaining high-ranging performance within strict power constraints. This approach allows the system to perform accurate range estimation from histogram data while significantly reducing overall power consumption, effectively addressing the dual challenges of performance and energy efficiency. By performing complex histogram processing on-chip and implementing efficient power management strategies, minimal power consumption is achieved while maintaining functionality.

In embodiments, the histogram processing circuit 114 includes multiple circuits that enable on-chip, ultra-low-power histogram processing. These circuits can include a correlator-based matched filter circuit compatible with multiple pulse widths, a closest peak-finding circuit, a strongest peak-finding circuit, and a crosstalk mitigation circuit. Histogram processing circuit 114 can also include shared MAC circuits that support various processing tasks across different sub-circuits.

In embodiments, the histogram processing circuit 114 employs techniques to optimize performance and efficiency. For example, utilizing look-up tables (LUTs) allows for efficient data storage and histogram processing with effective crosstalk mitigation. The crosstalk mitigation process can be adaptive, with the ability to update the crosstalk shape during operation.

In embodiments, the histogram processing circuit 114 provides the strongest and closest target outputs from the histogram data, enabling robust ranging with pile-up mitigation.

In embodiments, the histogram processing circuit 114 includes a histogram calculation circuit with a robust fallback option for consistent ranging in challenging scenarios.

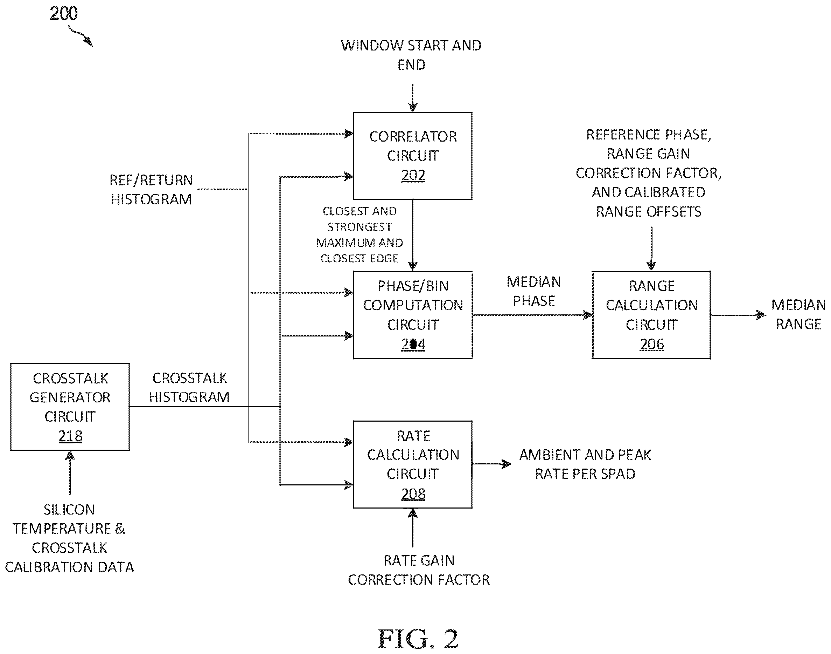

Figure 2 illustrates a block diagram of an embodiment histogram processing circuit 200. In embodiments, the histogram processing circuit 200 is implemented as the histogram processing circuit 114 of Figure 1. The histogram processing circuit 200 includes a correlator circuit 202, a phase/bin computation circuit, a range calculation circuit 206, a rate calculation circuit 208, and a crosstalk histogram generator circuit 218, which may (or may not) be arranged as shown.

The histogram processing circuit 200 includes discretized hardware circuits tasked to process histogram data. The configuration allows for simpler and smaller microcontrollers, enabling full integration on a single substrate. Histogram processing circuit 200 is configured to process inputs, including a reference/return histogram and a crosstalk histogram, and calculate rate and range values from the measured ToF sensor data.

The histogram processing circuit 200 enables efficient, modular, on-chip processing of time-of- flight data, reducing the need for external processing (i.e., without needing a powerful microcontroller) and minimizing power consumption. By integrating multiple processing steps and utilizing shared resources, the histogram processing circuit 200 can achieve high performance within strict power and area constraints.

Rather than processing the full reference/return histogram input as an entire array in memory, the histogram processing circuit 200 is advantageously configured to iterate the histogram by serially computing relevant outputs in a single pass. Each filter operation is applied in real-time and small memory blocks. The relevant processed information is stored for the desired outputs without modifying the histogram.

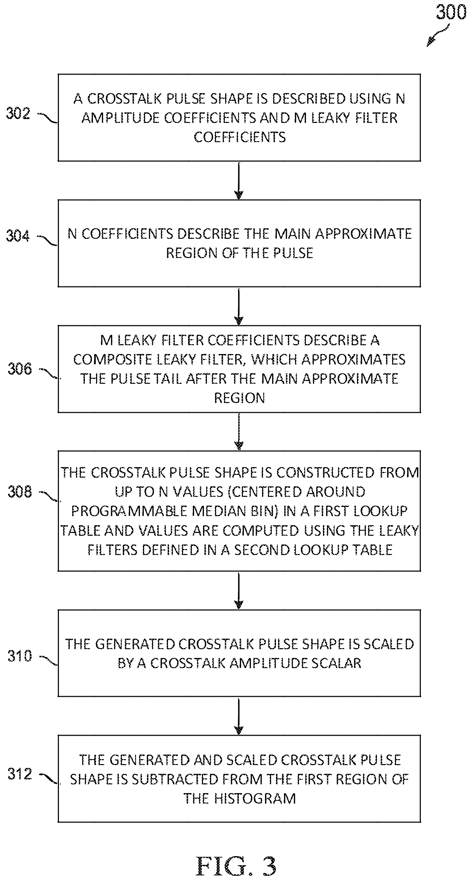

In embodiments, the crosstalk histogram generator circuit 218 generates a crosstalk histogram by performing linear interpolation using crosstalk calibration data and the silicon temperature as inputs. The crosstalk calibration data is a compact description (e.g., 19 bytes), further detailed with respect to Figure 3.

In embodiments, the crosstalk histogram is generated based on the adaptive crosstalk estimator techniques used to correct crosstalk in changing conditions as disclosed in U.S. Patent Application 18/348,600 (Attorney Docket No. ST-23-EDI-0386US01), assigned to the same entity as the present disclosure, which is incorporated herein by reference in its entirety. U.S. Patent Application 18/348,600 discloses a low-cost crosstalk shape storage and approximation technique for efficient and adaptive crosstalk removal.

The histogram processing circuit 200 includes a correlator circuit 202 that implements a closest edge finding algorithm. The algorithm can operate on the rising edge of the histogram data, enabling robust ranging of the nearest target. In embodiments, the algorithm can perform pile-up mitigation as disclosed in U.S. Patent Application 18/342,965 (Attorney Docket No. ST-22-EDI-1129US01), assigned to the same entity as the present disclosure, which is incorporated herein by reference in its entirety.

Typically, pile-up occurs when multiple reflected pulses overlap or arrive quickly, leading to measurement errors in traditional ToF systems. The correlator circuit 202 can distinguish between the overlapping signals, allowing for accurate distance measurements even in complex environments with multiple reflecting surfaces or partial obstructions.

The pile-up mitigation capability enhances the robustness and reliability of the ToF sensor, particularly in scenarios with multiple objects at different distances.

In embodiments, the correlator circuit 202 receives the reference/return histogram and the crosstalk histogram as inputs. It processes these inputs based on the window start and end points to determine two primary outputs: the closest and strongest maximum. These outputs can represent the nearest and strongest detected targets provided as inputs to the phase/bin computation circuit 204.

In embodiments, the phase/bin computation circuit 204 inputs the reference/return histogram, the crosstalk histogram, and the output data from the correlator circuit 202. The phase/bin computation circuit 204 output is further processed by firmware, which calculates and outputs a median phase.

In embodiments, the range calculation circuit 206 uses the median phase, a reference phase, a range gain correction factor (configuration/calibration data), and calibrated range offsets (calibration data) to compute the median range. The median range can represent the estimated distance to the detected target. In embodiments, the median phase is calculated by the phase/bin computation circuit 204.

In embodiments, the rate calculation circuit 208 processes the reference/return histogram and the crosstalk histogram inputs to determine pulse events. The pulse events and a rate gain correction factor (configuration/calibration data) are used to calculate the ambient and peak rates per SPAD. The rates can provide information about the detected pulses' light conditions and signal strength.

In embodiments, the histogram processing circuit 200 implements a bin-serial processing approach. This approach enables efficient processing of time-of-flight data without requiring large amounts of memory. Instead of accumulating and storing a full histogram before processing, the circuit processes sections of the histogram as it iterates through it, effectively implementing a just-in-time approach.

The histogram data is processed one bin at a time using the bin-serial processing method. For example, a firmware or sequencer presents each histogram bin sequentially to the processing hardware. The hardware circuit processes that bin, and the firmware presents the next bin when finished. The approach creates a state machine that maintains minimal internal buffers, significantly reducing memory requirements compared to traditional approaches that process entire histograms simultaneously.

The bin-serial architecture can be applied across various processing stages, including the correlator circuit 202 and the phase/bin computation circuit. The circuit achieves efficient processing with minimal memory requirements by processing one bin at a time while maintaining relationships between each bin's histogram, ambient, and crosstalk data. The approach can introduce minimal latency, as it may take several bins before the first result is output. Still, the trade-off allows for a much lower memory footprint and enables the processing of multiple bins in a single zone with limited resources.

The bin-serial approach minimizes memory usage and reduces the number of memory fetches required. In traditional implementations, correlation operations often involve numerous memory fetches, which can be power-intensive and time-consuming. By implementing bin-serial processing, the system avoids repeated memory fetches, making the overall system more efficient regarding both power consumption and processing speed.

Figure 3 illustrates a flowchart of an embodiment method 300 for generating the crosstalk calibration data. It is noted that all steps outlined in the flow chart of method 300 are not necessarily required and can be optional. Further, changes to the arrangement of the steps, removal of one or more steps and path connections, and addition of steps and path connections are similarly contemplated.

At step 302, a crosstalk pulse shape is described using N amplitude coefficients (e.g., eight amplitude coefficients) and M leaky filter coefficients (e.g., four leaky filter coefficients). A feature of using leaky integrators to describe the pulse tail is that variable size crosstalk shapes spanning from 16 to 128 bins can be generated from the same crosstalk lookup table description, enabling flexible adaptation to different system requirements.

The approach allows for a compact yet accurate representation of the complex crosstalk pulse shape. The N amplitude coefficients capture the main features of the pulse, particularly its peak and immediate surroundings, while the M leaky filter coefficients enable efficient modeling of the pulse's tail. To effectively handle high crosstalk magnitudes and long integration times, a 10000:1 dynamic range can be used for full pulse tail subtraction. The crosstalk leaky integration (LUTs) allow for the achieving of the extensive dynamic range without increasing the size of the crosstalk shape description. Using the combination of coefficients, method 300 can represent a wide range of pulse shapes with minimal data, which can be advantageous for efficient storage and processing in resource-constrained time-of-flight systems. The choice of N and M coefficients balances the trade-off between the accuracy of representation and computational efficiency.

At step 304, the N coefficients are employed to describe the main approximate region of the pulse. In embodiments, the coefficients are stored in a first lookup table. The main region of the pulse typically includes the rising edge, peak, and initial falling edge of the crosstalk pulse shape. Method 300 captures the pulse's most significant and energy-dense portion by focusing on this region. Using a lookup table to store the coefficients allows quick access and efficient processing during runtime.

The approach enables the system to rapidly reconstruct the primary features of the crosstalk pulse without requiring complex calculations for each bin. The number of coefficients can be chosen to balance the accuracy of the approximation with the memory requirements and processing speed.

It should be noted that the number of lookup-table (LUT) coefficients used is programmable (i.e., $\leq$ N).

At step 306, the M leaky filter coefficients describe a composite leaky filter. The leaky filter approximates the pulse tail after the main approximate region. In embodiments, the M coefficients are stored in a second lookup table.

Leaky filters can be particularly effective for modeling the gradual decay of the pulse tail, which often exhibits exponential-like behavior. Using a composite of leaky filters, method 300 can more accurately represent complex tail shapes that may not follow a simple exponential decay.

The approach allows for efficient computation of the tail region without storing individual values for each bin, significantly reducing memory requirements. Using a separate lookup table for these coefficients lets the system quickly switch between different tail models, providing flexibility for various operating conditions or pulse characteristics.

At step 308, the crosstalk pulse shape is constructed, where N represents the maximum number of lookup table entries (e.g., 8) and P represents the number of active lookup table entries (where $P \leq N$, e.g., 6). The construction can use up to N values from the first lookup table centered around a programmable median bin, with P controlling the crossover point to leaky integrator processing. For bins beyond this region, values can be computed using the leaky filters defined by the second lookup table.

The hybrid approach can accurately represent the pulse's main region while efficiently approximating the extended tail. The programmable median bin provides flexibility to align the pulse shape with observed crosstalk patterns, which may vary due to temperature or manufacturing variations.

Using the first lookup table for the central region can ensure an accurate representation of the pulse's peak and immediate surroundings, where precision is advantageous. The transition to leaky filter-based computation for the tail region balances accuracy with computational efficiency, allowing the system to model extended pulse shapes without requiring large amounts of memory or complex calculations for each bin.

The processing follows specific rules based on bin position, where N represents the maximum number of lookup table entries (e.g., 8) and P represents the number of active lookup table entries (e.g., 6, where $P \leq N$). The system can use the lookup table element for bins less than the number of active lookup table entries.

At a Pth bin, the system initializes two leaky integrators (e.g., leaky(o) and leaky(1)). For bins beyond P, the system updates these leaky integrators by multiplying them with their respective coefficients (e.g., coeff(o) and coeff(1)). The leaky filter output at position P can be computed as the sum of both leaky integrators' previous values: $f_{leaky}(p) = leaky_1(P-1) + leaky_2(P-1)$, where the M coefficients define the characteristics of leaky1 and leaky2. If P is less than N, the leaky filter outputs overwrite the corresponding lookup table values for bins after P.

At step 310, the generated crosstalk pulse shape from step 308 is scaled using, for example, a crosstalk amplitude scalar. The scaler can be a constant value or adaptive, allowing flexibility in different operating conditions. The scaling step is advantageous for adjusting the magnitude of the crosstalk correction to match the observed crosstalk intensity in the actual time-of-flight measurements.

A constant scaler might be suitable for systems with stable crosstalk characteristics, providing a simple and computationally efficient approach. On the other hand, an adaptive scaler can dynamically adjust the crosstalk correction based on real-time measurements or environmental factors. The adaptive approach can account for variations in crosstalk intensity due to changes in temperature, voltage, or other operating conditions, potentially improving the accuracy of crosstalk mitigation across various scenarios. The choice between constant and adaptive scaling allows the system to balance simplicity and robustness based on the application's specific requirements.

At step 312, the generated and scaled crosstalk pulse shape from step 310 is subtracted from the first region of the histogram. The "first region" typically refers to the early bins of the histogram, where crosstalk effects can be more pronounced due to internal reflections and scattering within the sensor package. Method 300 can isolate the true signal reflected from the target object by subtracting (serially per bin) the modeled crosstalk shape.

The process can improve the accuracy of distance measurements, particularly for close-range targets where crosstalk effects can be particularly disruptive. The subtraction can be performed bin-by-bin, with the correction amplitude at each bin determined by the constructed and scaled crosstalk pulse shape. The approach allows for precise correction that can account for the specific temporal characteristics of the crosstalk in the system. By applying the correction early in the signal processing chain, subsequent peak detection and distance calculation algorithms can operate on a cleaner, more accurate representation of the reflected signal.

The crosstalk pulse shape description outlined in Figure 3 enables a highly compact representation of the crosstalk data. Conventional approaches typically require storing 128 or 144 bins of 16-bit data, resulting in a memory footprint of approximately 256 bytes. However, the proposed implementation reduces the required storage to, for example, 19 bytes.

The compact representation can be achieved by combining a lookup table approach with multiple (e.g., two) leaky integrators to model complex pulse shapes accurately. Using N amplitude coefficients (e.g., eight) and M leaky filter coefficients (e.g., four), where the leaky integrators are sized to achieve, for example, a 10000:1 (14-bit) dynamic range for faithful pulse tail reproduction, enables the generation of crosstalk pulse shapes of variable lengths (e.g., 16 to 128 bins) from the same compact description while reducing memory requirements. The approach saves storage space and enables efficient real-time generation of the crosstalk histogram, as the compact description can be rapidly decompressed and scaled on the fly during processing.

The substantial reduction in memory usage from, for example, 256 bytes to 19 bytes represents a significant optimization for the memory-constrained system, allowing for effective crosstalk mitigation without compromising the overall system's low memory footprint.

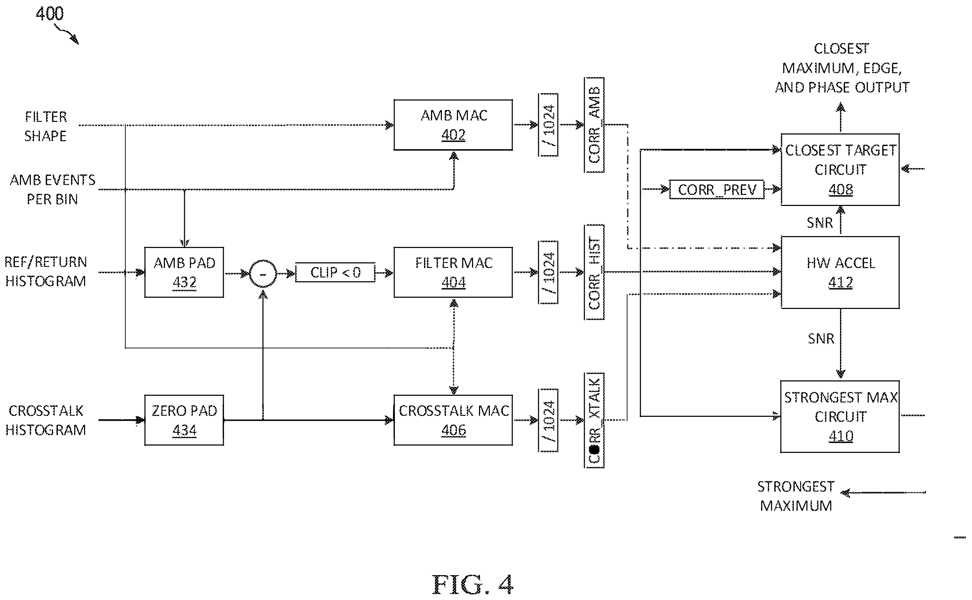

Figure 4 illustrates a block diagram of an embodiment correlator circuit 400. In embodiments, correlator circuit 400 is implemented as the correlator circuit 202 of Figure 2. Correlator circuit 400 includes an ambient MAC (Multiply-Accumulate) circuit 402, a filter MAC circuit 404, a crosstalk MAC circuit 406, a closest target circuit 408, and a strongest maximum circuit 410, which may (or may not) be arranged as shown.

The inputs to the correlator circuit 400 include ToF sensor data (i.e., reference/return histogram and crosstalk event histogram) and configuration/calibration data (i.e., filter shape and start and end points of the histogram window). Correlator circuit 400 processes the inputs to generate outputs, including the closest and strongest maximum.

Advantageously, correlator circuit 400 enables efficient processing of time-of-flight data, detecting the nearest and strongest targets while accounting for ambient light and crosstalk effects. Its configuration facilitates low-power operation through shared MAC circuits, bin-serial processing, and optimized data representations.

In embodiments, correlator circuit 400 is an accelerated matched filter correlator with a tunable filter shape configured to detect the strongest and nearest peaks from the ToF data measurements. Correlator circuit 400 is compatible with multiple pulse/bin widths (i.e., timing options) to enable short range (2.4 meters (m)), medium range (e.g., 4.8 m), and long range (e.g., 9.6 m) operations.

The filter shape defines the correlation pattern for signal detection and multiple pulse widths. In embodiments, the filter shape input includes a set of filter coefficients (e.g., 5) representing the expected return pulse shape in the time-of-flight measurement. Each filter coefficient can be represented with a pre-determined bit-width (e.g., 11 bits). The coefficients can be in a signed fixed-point format (e.g., signed 1.10 format), allowing for positive and negative values with fractional precision. In embodiments, the filter shape is tunable.

A set of filter coefficients can define the filter shape used in the MAC circuits. The coefficients can be programmable, allowing for tuning of the filter response to optimize performance for different operating conditions or pulse characteristics.

The filter coefficients can be represented using a fixed-point format that balances precision with efficient computation. For example, the system can use a 10-bit representation where a value of 1024 corresponds to 1.0. The approach allows for representing fractional values, such as 1.9 or 0.5, with sufficient precision while maintaining computational efficiency.

For example, the MAC circuit processes the histogram data and multiplies each 24-bit histogram bin value by the 10-bit filter coefficients. To maintain the correct scale and prevent overflow, the result can be divided by 1024 (equivalent to a right shift by 10 bits). The division effectively implements the fractional part of the filter coefficients.

The fixed-point representation enables the system to achieve high precision in the filter coefficients without requiring larger storage or complex floating-point operations. This approach can be particularly advantageous in the memory-constrained environment of the system, allowing for efficient implementation of sophisticated filtering operations with minimal computational resources.

In embodiments, the MAC circuits maintain a deep buffer (e.g., five-element), a small cache for recent filter outputs. The buffer enables zero-crossing detection without requiring storage or access to the full histogram, further contributing to the system's memory efficiency.

The reference/return histogram input represents the time-of-flight data measurements collected by a ToF sensor. Each bin in the reference/return histogram corresponds to a specific time delay, and the value in each bin represents the number of photons detected at that delay. The reference histogram can be generated from a known reference signal, while the return histogram can be generated from the actual reflected signal from the scene. The reference/return histogram input can consist of a variable number of bins (e.g., 32 or 128) of multi-bit unsigned data (e.g., 24 bits) representing the time-of-flight measurements. The variable number of bins (e.g., 32 or 128) allows for flexibility in the time resolution and range of the measurements.

The crosstalk event histogram input models the effects of internal optical crosstalk, which can occur when unwanted signals are created by adding cover glass on top of the device. The internal optical crosstalk can be distinct from electro-optical detector crosstalk between neighboring SPADs. While both types of crosstalk have an optical component, the internal optical crosstalk refers to the signal from the light path between the emitter and cover glass within the assembly. In contrast, the electro-optical crosstalk is an effect at the detector level, which can be triggered by any incoming light from internal (e.g., assembly level) and external light paths. The crosstalk event histogram represents the expected internal optical crosstalk pattern, with its shape primarily determined by the VCSEL emission and SPAD response characteristics. By separately processing the internal optical crosstalk data, the correlator circuit 400 can more accurately distinguish between true signals and crosstalk-induced noise. The crosstalk event histogram input can comprise several bins (e.g., 64) of multi-bit unsigned data (e.g., 24-bits), modeling the crosstalk effects.

Both histograms can be processed by the correlator circuit 400 in a bin-serial manner, allowing it to handle the data efficiently with minimal memory requirements. The multi-bit unsigned data format (e.g., 24-bits) for each bin provides a wide dynamic range to capture weak and strong signals accurately. The high bit depth can be particularly advantageous for maintaining precision in low-light conditions and when dealing with reflections from objects at various distances and reflectivities.

The correlator circuit 400 takes the start and end points of the histogram window as input parameters. The parameters define the specific region of interest within the reference/return histogram for processing. The start point indicates the bin number where the correlation analysis should begin, while the endpoint specifies the bin number where it should end. The windowing approach allows correlator circuit 400 to focus on the most relevant portion of the histogram, which can significantly reduce processing time and power consumption. It can be particularly useful in scenarios where the approximate distance range of the target is known or when dealing with specific distance ranges to avoid processing irrelevant data. The ability to adjust the window parameters provides flexibility in adapting the correlator's operation to different measurement scenarios or to focus on specific regions of interest in the time-of-flight data.

In embodiments, correlation circuit 400 includes an ambient pad circuit 432 and a zero-pad circuit 434 to handle edge cases in its processing. The ambient pad circuit 432 can be used when starting the correlation process or when the operation extends beyond the available data array or window limits. The circuit can pad with the ambient light value instead of zeros in these cases. The approach can help maintain the integrity of the correlation, especially at the beginning of the processing, where history data may not be available. A zero-pad circuit 434 can be used for the crosstalk data, filling any out-of-range bins with zeros. The padding techniques enable the correlator circuit 400 to perform its operations consistently across the entire range of input data, including at the edges of the histograms.

In embodiments, between the ambient pad circuit 432 and the filter MAC circuit 404, the correlator circuit 400 includes subtract and clip operations. The subtract operation performs on-the-fly subtraction of the crosstalk data from the histogram data. This can be advantageous for isolating the signal of interest from the crosstalk effects.

Following the subtraction, a clip operation ensures that resulting values remain non-negative. The clipping can be advantageous because the subtraction might occasionally result in negative values, which are invalid in this context. The subtraction operation is performed if the histogram events are larger than the crosstalk events; otherwise, the output is zero. The approach ensures that the data fed into the filter MAC circuit 404 is positive, maintaining the integrity of subsequent calculations.

The ambient MAC circuit 402, the filter MAC circuit 404, and the crosstalk MAC circuit 406 are configured to perform multiply-accumulate operations on the input data. These circuits can use, for example, multi-bit histogram bin values (e.g., 24-bit), multi-bit unsigned coefficients (e.g., 11-bit), and several bits for the number of coefficients (e.g., 3-bits), resulting in multi-bit outputs (e.g., 38-bit).

In embodiments, a division operation (e.g., divide by 1024) is performed after each MAC circuit. The division can be part of a fixed-point arithmetic approach that maintains precision while working within a 32-bit domain. The filter shape coefficients can be represented such that the divider value (e.g., 1024) corresponds to 1.0, allowing for fractional values (e.g., 1.9 or 0.5) to be represented accurately.

For example, a 24-bit histogram value can be multiplied by the 10-bit (1024 resolution) coefficients when performing a MAC operation. In this example, the division by 1024 (equivalent to a right shift by 10 bits) is applied to rescale the result, effectively implementing the fractional part of the filter coefficients. The approach allows the correlation circuit 400 to maintain high resolution in the filter coefficients without requiring larger storage or floating-point operations, thus optimizing precision and efficiency.

In embodiments, the correlator circuit 400 implements a bin-serial processing approach, processing data one bin at a time. The approach can minimize memory usage and reduce the number of memory fetches, allowing for efficient processing with limited hardware resources.

The ambient MAC circuit 402 calculates the ambient light contribution, the filter MAC circuit 404 performs the main correlation operation, and the crosstalk MAC circuit 406 computes the crosstalk contribution. Each MAC circuit can use a multi-element buffer (e.g., five-element deep), maintaining a short history of processed data without requiring large amounts of memory. This can enable efficient operations like zero-crossing detection.

The correlator circuit 400 processes data along three main paths, each serving a specific purpose in the signal processing chain. The first path processes the ambient light data. Starting at the ambient MAC circuit 402, it calculates the ambient light contribution (*corr_amb*). This value is used in the signal-to-noise Ratio (SNR) calculation, specifically in the numerator, where it's subtracted from the histogram correlation (*corr_hist*) to isolate the signal of interest from the background ambient light.

In embodiments, the operation is performed serially, processing one filter coefficient at a time. For each filter coefficient, the ambient MAC retrieves the current filter coefficient. It multiplies the filter coefficient with the corresponding ambient light value for the current bin (i.e., ambient events per bin). The result is added to the accumulator. After processing all coefficients, the final value in the accumulator represents the ambient light contribution for the current bin, considering the shape of the expected signal as defined by the filter coefficients. The approach allows the ambient light calculation to be sensitive to the same signal shape that the main correlation is looking for, potentially improving the accuracy of ambient light estimation and subsequent SNR calculations.

The second path handles the reference/return histogram data. It begins at the filter MAC circuit 404, where the histogram data is correlated with the filter shape. The output of the histogram correlation (*corr_hist*) is fed into the hardware accelerator 412, where the SNR value is calculated. The output of the histogram correlation (*corr_hist*) is provided to the closest target circuit 408 to help identify the earliest significant signal return and to the strongest maximum circuit 410 to identify the peak with the highest SNR.

In embodiments, the correlator circuit 400 includes hardware accelerators 412 for operations such as square root and division, used in the SNR calculation. This process can involve, for example, multi-bit addition and subtraction (e.g., 28-bit), a left shift of a certain number of bits (e.g., 4 bits), a multi-bit square root operation (e.g., 32-bit) yielding a multi-bit output (e.g., 16-bit), and a multi-bit division (e.g., 32-bit).

In embodiments, the hardware accelerator 412 is a specialized circuit designed to perform complex mathematical operations required for SNR calculations efficiently. It comprises multiple sub-components, including a subtraction circuit, an addition circuit, a square root circuit, and a division circuit.

The SNR calculation is performed for each bin in the histogram (defined by the start window and end window), allowing the correlator circuit 400 to assess the signal quality across the entire range of time-of-flight measurements. The bin-by-bin SNR calculation is advantageous for accurately identifying the closest and strongest targets in the scene.

The third path handles the crosstalk data. Beginning at the crosstalk MAC circuit 406, it computes the crosstalk contribution (*corr_xtalk*). This value is used in the denominator of the SNR calculation, where it's added to the histogram correlation (*corr_hist*) to account for all noise sources before the square root operation.

Hardware accelerator 412 calculates the SNR for each bin using the outputs from the MAC circuits, creating an SNR profile across the histogram. The SNR calculation can be performed using the following equation:

$SNR = \frac{corr\_hist - corr\_amb}{\sqrt{corr\_hist + corr\_xtalk}}$ , where *corr_hist* represents the correlation value of the histogram data, *corr_amb* represents the correlation value of the ambient light, and *corr_xtalk* represents the correlation value of the crosstalk.

In embodiments, to implement the equation, hardware accelerator 412 subtracts the ambient correlation (*corr_amb*) from the histogram correlation (*corr_hist*). This step isolates the signal of interest from the background ambient light. Next, it adds the histogram correlation (*corr_hist*) to the crosstalk correlation (*corr_xtalk*) to account for all noise sources.

The hardware accelerator 412 performs a square root operation to scale the photon shot noise (Poisson standard deviation) term in the SNR calculation. The square root operation can be implemented using a dedicated hardware accelerator to optimize speed and power efficiency.

Finally, the hardware accelerator 412 divides the numerator (*corr_hist - corr_amb*) by the denominator ( $\sqrt{corr\_hist + corr\_xtalk}$ ) to obtain the SNR value.

The closest target circuit 408 determines the closest detected target. It uses current correlation (*corr_hist*) results and previous correlation (*corr_prev*) values to identify the earliest significant signal return. The output (i.e., Closest Maximum) of the closest target circuit can include the closest maximum, which provides information such as the start bin, end bin, peak location, and SNR of the closest detected target. For the closest target detection, the closest target circuit 408 uses the output from the third path (i.e., the histogram correlation (*corr_hist*)). It analyzes this data bin by bin, looking for the first occurrence of a significant signal that exceeds a predetermined threshold. The circuit also considers the SNR values calculated for each bin to ensure the detected target is not just noise.

In embodiments, the closest detect target determination is performed using the approach disclosed in U.S. Patent Application 18/176,163 (Attorney Docket No. ST-22-EDI-0847US01), assigned to the same entity as the present disclosure, which is incorporated herein by reference in its entirety.

The strongest maximum circuit 410 identifies the peak with the highest SNR and stores its location and SNR value. This provides information about the strongest detected target. The output (i.e., Strongest Maximum) of the strongest maximum circuit 410 can provide information such as the peak location and SNR of the strongest detected target. The outputs can be represented using various bit widths appropriate for the application.

In embodiments, the strongest maximum circuit 410 identifies and stores information about the strongest signal detected in the histogram. As the correlator circuit 400 processes the histogram data bin by bin, the hardware accelerator 412 calculates the SNR for each bin. The strongest maximum circuit 410 keeps track of the highest SNR value it has seen so far and the corresponding bin location.

The newly calculated SNR is compared with the stored maximum SNR for each new bin processed. If the new SNR is higher than the stored maximum, it becomes the new maximum. In this case, the new maximum SNR value and the bin location (peak location) where this maximum occurred replace the existing data. However, if the new SNR is not higher than the stored maximum, the previously stored maximum SNR and its corresponding location are retained. The process continues for all bins in the histogram. By the end of the processing, the strongest maximum circuit 410 identifies the bin with the highest SNR across the entire histogram.

The output of the strongest maximum circuit 410 consists of the peak location and the calculated SNR value. The peak location corresponds to the bin number with the highest SNR. In embodiments, it can be represented as an 8-bit value, allowing up to 256 distinct bin locations. The calculated SNR corresponds to the actual SNR value at the peak location. In embodiments, it can be represented in a fixed-point format (e.g., 12.4 format), balancing range and precision in representing the SNR.

The strongest signal information can be advantageous for applications that identify the most prominent object in the scene, which may not always be the closest object.

The correlator circuit 400 maintains several pieces of information for storage and output. The start bin, end bin, peak location, and SNR are stored for the closest target. These can be derived from the closest target circuit 408 and the corresponding SNR calculations. For the strongest target, the peak location and SNR are stored. These can be determined by the strongest maximum circuit 410, which identifies the bin with the highest SNR value.

The bin-serial processing approach can be applied across all three paths. It allows the circuit to process one bin at a time while maintaining the relationships between each bin's histogram, ambient, and crosstalk data. The approach enables efficient processing with minimal memory requirements.

The correlator circuit 400 concludes by outputting the Closest Maximum (from the closest target circuit 408) and the Strongest Maximum (from the maximum circuit 410), providing crucial information about the detected targets, including their locations and signal strengths.

In embodiments, the inputs to the correlator circuit include the reference/return histogram data, which represents the time-of-flight measurements collected by the sensor. Each bin in this histogram corresponds to a specific time delay, with the value in each bin representing the number of photons detected at that delay. The correlator circuit uses a crosstalk event histogram, which models the effects of optical and electrical crosstalk in the ToF sensor.

Additional inputs include the filter shape, which defines the correlation pattern for signal detection, and the histogram window parameters (start and end points). These parameters allow method 500 to focus on the most relevant portion of the histogram, reducing processing time and power consumption.

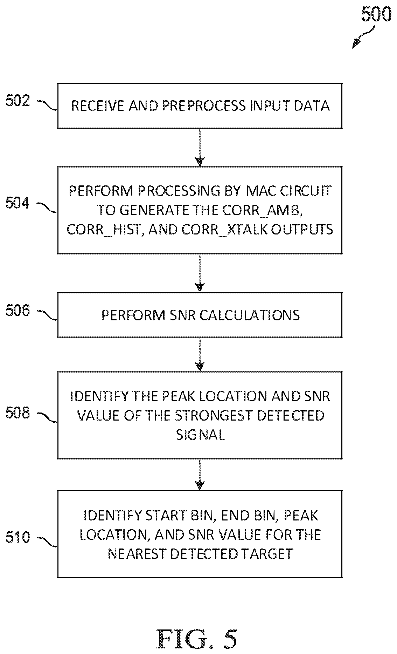

Figure 5 illustrates a flowchart of an embodiment method 500 for processing ToF sensor input data in a bin-serial manner. In embodiments, method 500 is implemented using the correlator circuit 400. Unlike previous approaches that process the histogram as a whole array in memory, method 500 performs histogram operations in a serialized fashion in a single pass. The correlation circuit iterates over the histogram, computing values as it progresses. This approach significantly reduces memory requirements and enables on-the-fly processing of the time-of-flight data.

At step 502, the correlator circuit 400 receives and prepares its inputs. The inputs include the filter shape, which defines the correlation pattern for signal detection; ambient events per bin, representing background light levels; the reference/return histogram, which contains the time-of-flight measurement data; and the crosstalk histogram, modeling internal reflection effects in the sensor.

The ambient MAC circuit 402, filter MAC circuit 404, and crosstalk MAC circuit 406 each receive their respective inputs. The ambient pad circuit 432 and zero-pad circuit 434 prepare the reference/return histogram input and crosstalk histogram input for processing. In embodiments, subtraction and clipping operations refine the data before entering the filter MAC circuit 404.

The preparatory steps ensure the input data is adequately conditioned for the subsequent processing stages, setting the foundation for accurate time-of-flight measurements and target detection.

At step 504, the correlator circuit 400 performs parallel or serial processing using MAC circuits: the ambient MAC circuit 402, filter MAC circuit 404, and crosstalk MAC circuit 406. Each MAC circuit operates on its input data to produce on-the-fly correlation values. The MAC circuits enable serialized histogram processing, allowing for bin-by-bin operations without requiring storage of the entire histogram in memory. The circuit can compute correlations and apply corrections in real-time by processing data in this manner as it iterates through the histogram bins.

The ambient MAC circuit 402 processes the filter shape and ambient events per bin. It multiplies each ambient event value by the corresponding filter coefficient and accumulates the results. The operation quantifies the contribution of ambient light to the overall signal, producing the *corr_amb* output.

The filter MAC circuit 404 operates on the preprocessed reference/return histogram input. It applies the filter coefficients to the reference/return histogram input, effectively correlating the measured signal with the expected pulse shape. The process helps to isolate the actual reflected signal from noise, resulting in the *carr_hist* output.

The crosstalk MAC circuit 406 processes the zero-padded crosstalk histogram. Applying the filter coefficients to the preprocessed crosstalk histogram input quantifies the impact of internal reflections within the sensor, producing the *corr_xtalk* output.

In embodiments, each MAC circuit is followed by a divider operation. The division scales down the accumulated results to prevent overflow in the fixed-point arithmetic system. Further, it effectively implements the fractional part of the filter coefficients, allowing for a precise representation of coefficient values between -1 and 1.

Fixed-point arithmetic, facilitated by the divider operations, enables the correlator circuit to maintain high precision while operating within the constraints of a 32-bit computational domain. The approach balances accuracy with computational efficiency for real-time processing in compact, low-power devices.

The outputs of the MAC circuits (i.e., *carr_amb, corr_hist,* and *corr_xtalk*) form the foundation for subsequent processing steps, including SNR calculation and target detection. In embodiments, by performing the correlations in parallel, the circuit efficiently processes the time-of-flight data, which is used for accurate distance measurements and target identification.

The filter operation, used to enhance the signal and suppress noise, is applied in real time as the circuit processes each bin. Instead of storing the entire filtered histogram, the circuit maintains a small buffer of recent filter outputs. The number of filter coefficients can determine the buffer size, typically much smaller than the full histogram, thereby reducing the circuit's memory footprint. In the pulse weighted histogram implementation, the buffer enables maximum detection through first derivative analysis, using a $\pm$ 1 filter to approximate the gradient by computing bin-to-bin differences.

At step 506, the hardware accelerator 412 performs signal-to-noise ratio (SNR) calculations using the outputs from the MAC circuits. The calculations are performed on the fly for each bin, eliminating the need to store SNR values for the entire histogram and further demonstrating the efficiency of the serialized processing approach. The SNR values provide a measure of signal quality for each bin, enabling the system to distinguish genuine reflections from noise and accurately identify the strongest and closest targets.

It receives three main inputs: *corr_amb* from the ambient MAC circuit 402, *carr_hist* from the filter MAC circuit 404, and *corr_xtalk* from the crosstalk MAC circuit 406.

The hardware accelerator 412 processes the inputs to calculate the SNR for each bin in the histogram. It implements the formula: $SNR = \frac{corr\_hist - corr\_amb}{\sqrt{corr\_hist + corr\_xtalk}}$. The *corr_hist* input represents the signal of interest, *corr_amb* is subtracted to remove the ambient light contribution, and *corr_xtalk* is added to the denominator to account for the noise from crosstalk. The square root operation in the denominator scales the noise term.

At step 508, the strongest maximum circuit 410 operates to identify the peak with the highest signal-to-noise ratio (SNR) in the time-of-flight measurements. It receives inputs from the hardware accelerator 412, which provides SNR values for each bin in the histogram. The circuit also has access to the *corr_hist* values from the filter MAC circuit 404, allowing it to correlate SNR peaks with their corresponding histogram locations.

As the strongest maximum circuit 410 processes these inputs, it continuously compares the current SNR value with the highest SNR it has encountered so far. When a new maximum is found, the circuit updates its stored values, keeping track of the bin location (peak location) where this maximum occurred and the corresponding SNR value.

The output of the strongest maximum circuit 410 is the Strongest Maximum, which typically includes the peak location and the calculated SNR value of the strongest detected signal. This information is beneficial for applications that identify the most prominent object in the scene, which may not always be the closest object. The Strongest Maximum data is also fed back to the closest target circuit 408, providing context for detecting the nearest target.

At step 510, the closest target circuit 408 processes data to identify the nearest significant reflection in the time-of-flight measurements. In embodiments, it receives several inputs to perform this task: the current *corr_hist* value from the filter MAC circuit 404, the previous correlation value ( *corr_prev*), the SNR output from the hardware accelerator 412, and the Strongest Maximum information from the strongest maximum circuit 410.

The closest target circuit 408 analyzes the inputs on a bin-by-bin basis, searching for the earliest occurrence of a significant signal that exceeds a predetermined threshold. It compares the current *corr_hist* value with the previous correlation value ( *corr_prev*) to detect rising edges in the correlation data, which indicate the start of a potential target reflection. The circuit also considers the SNR values to ensure that the detected signal is genuine and not merely noise. The Strongest Maximum information from step 508 provides additional context, allowing the closest target circuit 408 to refine its detection criteria.

As it processes the data, the closest target circuit 408 keeps track of key parameters related to the nearest detected target. These can include the start bin (where the signal first exceeds the threshold), the end bin (where the signal falls below the threshold), the peak location (the bin with the highest correlation within the target), and the corresponding SNR value.

The output of the closest target circuit 408 is the Closest Maximum, which encapsulates the information about the nearest detected target. The output provides data for applications requiring precise distance measurements to the closest object, such as collision avoidance systems or short-range gesture recognition. When measuring complex objects with varying depths (such as slanted surfaces), the circuit can identify the distance to the closest part of the object, making it particularly effective for collision avoidance applications. By identifying the closest target efficiently, the circuit enables the time-of-flight sensor system to respond quickly to nearby objects, enhancing its effectiveness in real-time sensing applications.

By processing the histogram data in a serialized, bin-by-bin manner, method 500 achieves several advantages. It significantly reduces memory requirements by eliminating the need to store full histograms or intermediate results. The approach enables real-time, on-the-fly processing of time-of-flight data, including complex operations like correlation, crosstalk correction, and SNR calculation. The serialized approach allows for efficient implementation in hardware with limited resources, making it particularly suitable for low-power, compact ToF sensor systems.

It is noted that all steps outlined in the flow chart of method 500 are not necessarily required and can be optional. Further, changes to the arrangement of the steps, removal of one or more steps and path connections, and addition of steps and path connections are similarly contemplated.

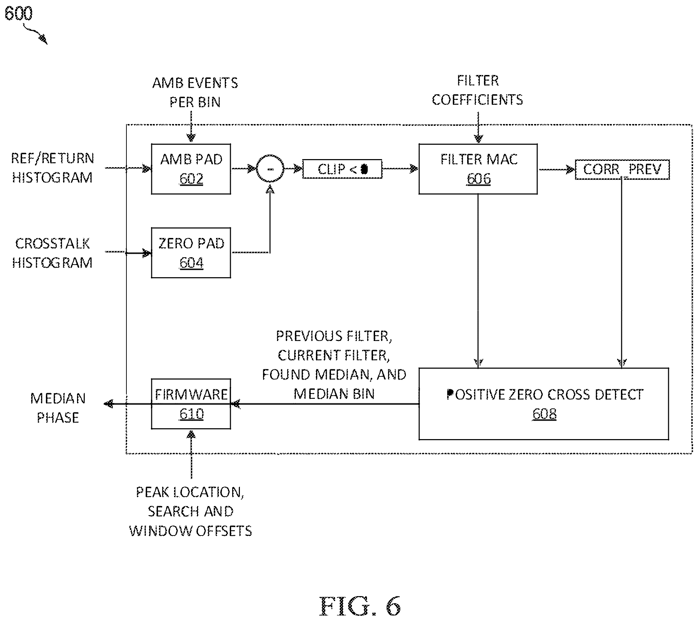

Figure 6 illustrates a block diagram of an embodiment phase/bin computation circuit 600. In embodiments, phase/bin computation circuit 600 is implemented as the phase/bin computation circuit 204 of Figure 2. The phase/bin computation circuit 600 includes an ambient pad circuit 602, a zero-pad circuit 604, a filter MAC circuit 606, and a positive zero crossing detection circuit 608, which may (or may not) be arranged as shown.

In embodiments, combining the phase/bin computation circuit 600 with the correlator circuit 400 can yield a single circuit. The integration could reduce overall circuit complexity and improve efficiency by sharing common components and minimizing data transfer between separate blocks.

The inputs to the phase/bin computation circuit 600 include ToF sensor data (i.e., reference/return histogram and crosstalk event histogram) and configuration/calibration data (i.e., filter coefficients, peak location, and offset parameters). The reference/return histogram input and the crosstalk event histogram input are similar to those discussed as inputs to the correlator circuit 400 and, for the brevity of discussion, are not repeated.

The phase/bin computation circuit 600 processes data in a bin-serial fashion, iterating over each bin within the defined search and pulse windows. The approach minimizes memory requirements and allows for efficient processing with limited hardware resources.

In embodiments, firmware 610 implemented within the phase/bin computation circuit 600 receives several input parameters to define the processing windows for the pulse-width histogram operation. The inputs include a peak location input provided by the correlator circuit 400 and configuration parameters, including the search start offset, search end offset, window start offset, and window end offset.

Firmware 610 interfaces the hardware components and the higher-level control systems in the phase/bin computation circuit 600. Implemented, for example, as embedded software stored in non-volatile memory, firmware 610 can initialize and configure the hardware components of the phase/bin computation circuit, including setting up the filter coefficients for the filter MAC circuit 606. It receives and processes the peak location and offset parameters to calculate the boundaries for the search and pulse windows.

The firmware 610 can also implement the interpolation algorithms for precise median phase calculation, utilizing the positive zero crossing detection circuit 608 outputs. In cases where no positive zero crossing is detected, the firmware 610 can executes a fallback option, implementing an alternative phase estimation method.

In embodiments, the median phase calculation can be implemented in hardware or firmware.

The search start offset, search end offset, window start offset, and window end offset are configuration parameters used to define processing windows for the pulse-width histogram operation. The offsets work with the peak location to determine the specific regions of the reference/return histogram input that will be analyzed.

The search start offset and search end offset define the boundaries of the search window relative to the peak location. The search start offset can be a negative value (e.g., -2), indicating how many bins before the peak location to begin searching. The search end offset can be a positive value (e.g., +2), specifying how many bins after the peak location to end the search. The search window is used to locate the median bin within a narrower range around the detected peak.

The window start and end offsets define a broader pulse window relative to the peak location. The window start offset can be a larger negative value (e.g., -3) compared to the search start offset, while the window end offset can be a larger positive value (e.g., +4). The wider window encompasses most of the pulse shape, ensuring that the full extent of the pulse is captured for accurate phase calculation.

The offset parameters allow the system to adapt to different pulse widths and shapes. By adjusting the offsets, the phase/bin computation circuit 600 can focus on the most relevant portions of the histogram, optimizing processing efficiency while maintaining accuracy. Configuring these offsets provides flexibility to accommodate various operating conditions and target detection scenarios.

The firmware 610 calculates the boundaries for the search and pulse windows using these inputs. The search window can be defined as:

$$\text{Search Start} = \text{Search Start Offset} + \text{Peak Location}$$

$$\text{Search End} = \text{Search End Offset} + \text{Peak Location.}$$

Similarly, the pulse window can be defined as:

$$\text{Pulse Start} = \text{Window Start Offset} + \text{Peak Location}$$

$$\text{Pulse End} = \text{Window End Offset} + \text{Peak Location.}$$

The calculated Search Start, Search End, Pulse Start, and Pulse End values are provided as inputs to the phase/bin computation circuit 600. These values define the range of bins that the hardware components will process.

Like the ambient pad circuit 432, the ambient pad circuit 602 receives ambient events per bin data and pads the reference/return histogram input data when processing extends beyond available data. The zero-pad circuit 604, similar to the zero-pad circuit 434, pads the crosstalk histogram input with zeros for out-of-range bins.

In embodiments, similar to the correlator circuit 400, between the ambient pad circuit 602 and the filter MAC circuit 606, the phase/bin computation circuit 600 includes subtract and clip operations. The subtract operation performs on-the-fly subtraction of the crosstalk from the reference/return histogram input. This can be advantageous for isolating the signal of interest from the crosstalk effects. Following the subtraction, a clip operation ensures that resulting values remain non-negative. The clipping can be advantageous because the subtraction might occasionally result in negative values, which are invalid in this context. The subtraction operation is performed if the reference/return histogram input events are larger than the crosstalk events; otherwise, the output is zero. The approach ensures that the data fed into the filter MAC circuit 606 is positive, maintaining the integrity of subsequent calculations.

The filter MAC circuit 606 applies filter coefficients to the preprocessed reference/return histogram input, bin by bin, within the defined search and pulse windows provided by, for example, the firmware. The filtering operation helps isolate and enhance the relevant pulse information from the overall histogram data, facilitating the subsequent detection of the median phase of the reflected light pulse.

The filter coefficients define a filter shape applied to the histogram data to enhance certain features and suppress others. In embodiments, the filter MAC circuit 606 uses the filter coefficients in a convolution-like operation with the preprocessed reference/return histogram input. For each bin in the processing window, the filter MAC circuit 606 multiplies the histogram bin value by each signed filter coefficient. The results of the multiplications are accumulated over the coefficient values. The operation effectively applies a weighted averaging or filtering effect to the preprocessed reference/return histogram input.

In embodiments, the filter shape created by the filter coefficients is designed to have a specific response that aids in detecting the pulse's median phase. Typically, the filter coefficients are arranged to create a shape that transitions from positive to negative values, allowing for the detection of zero crossings corresponding to the pulse's median phase.

In embodiments, the half-width parameter of the pulse width is used to generate the filter coefficients. The parameter influences the characteristics of the filter applied to the reference/return histogram input. In pulse weighted histogram processing, the "half-width" refers to approximately half the expected width of the pulse in the histogram. The half-width parameter of the pulse weighted helps tailor the filter MAC circuit 606 to match the expected pulse shape and width in the reference/return histogram input.

When generating the filter coefficients, the half-width parameter can determine how many positive and negative coefficients are used and their relative values. For example, a larger half-width parameter value can result in a wider filter with more coefficients, suitable for processing broader pulses. Conversely, a smaller half-width parameter value could lead to a narrower filter, more appropriate for sharper pulses.

By adjusting the half-width parameter, the system can optimize the filter response to better match the characteristics of the expected pulse, potentially improving the accuracy of the median phase detection. The adaptability allows the phase/bin computation circuit 600 to be tuned for different operating conditions or pulse shapes encountered in various time-of-flight measurement scenarios.

Using the filtering approach, the phase/bin computation circuit 600 can effectively process the reference/return histogram input to extract the timing information for accurate distance measurements while minimizing computational resources. The bin-serial processing approach, combined with the compact representation of the filter coefficients, allows for efficient implementation in hardware with limited memory resources.

The output of the filter MAC circuit 606 is coupled to the positive zero crossing detection circuit 608. Based on the analysis of the filter MAC circuit 606 results, the positive zero crossing detection circuit 608 produces several outputs. These include the previous filter value, the current filter value, the found median flag, and the median bin.

The positive zero crossing detection circuit 608 compares the current and previous output values from the filter MAC circuit 606 to detect zero crossings. When a positive zero crossing is detected, the current and previous filter values are stored.

In embodiments, the found median flag indicates whether a valid median has been detected. The binary output is set when the positive zero crossing detection circuit 608 detects a positive zero crossing in the filtered data, signifying that the median point of the pulse has been found. The found median flag confirms that a valid pulse median has been identified and that a median phase calculation can proceed.

The median bin output represents the bin number where the positive zero crossing occurred. This value corresponds to the approximate location of the pulse's median in the histogram. The median bin can be an integer value that identifies the specific histogram bin where the filtered data transitions from negative to positive, indicating the center of the pulse.

The found median flag and median bin outputs are used in conjunction with the previous and current filter values by the firmware 610 of the phase/bin computation circuit 600 to perform interpolation to determine the median phase.

In embodiments, the firmware 610 calculates the median phase using a first interpolation formula, which can be represented as $Median\ Phase = Median\ Bin + \frac{abs(Previous\ Filter\ Value)}{Current\ Filter\ Value - Previous\ Filter\ Value}$. In embodiments, the median phase output is represented as a 19-bit unsigned value in 8.11 format, providing a balance between range and precision for the phase measurement.

In embodiments, the phase calculation focuses on the rising edge of the detected pulse as disclosed in U.S. Patent Application 18/304,589 (Attorney Docket No. ST-22-EDI-1099US01), assigned to the same entity as the present disclosure, which is incorporated herein by reference in its entirety.

This approach can be effective in scenarios with multiple reflections or overlapping pulses. The filter MAC circuit 606 applies carefully designed filter coefficients to the preprocessed histogram data, emphasizing the rising edge of the pulse. The positive zero crossing detection circuit 608 identifies the point where the filtered data transitions from negative to positive, corresponding to the median phase of the rising edge.

In embodiments, if no positive zero crossing is detected (i.e., failure of the zero-cross search), indicating a challenging scenario such as merged targets, a fallback option (i.e., extension) enables consistent ranging even when the standard method fails.

In the fallback option, firmware 610 derives the median phase by offsetting the maximum condition as an approximation of the first derivative (i.e., $\frac{dh}{dt} = 0$). The fallback option provides a suitable estimate for the median phase. The second interpolation equation represents the filtering operation applied to the histogram data in the histogram circuit. It describes a discrete approximation of the first derivative of the histogram data.

A convolution formula operation can be represented as $\frac{dh}{dt} = conv(h, [+1, +1, +1, +1, -1, -1, -1, -1])$, where $\frac{dh}{dt}$ represents the derivative (rate of change) of the histogram data with respect to time, *conv*() denotes a convolution operation, *h* represents the input histogram data, and [+1, [+1, [+1, [+1, -1, -1, -1, -1] is the convolution kernel or filter coefficients.

In practical terms, the median phase is interpolated using a second interpolation formula in the boundary region of the maximum derived by the offset of the maximum estimate. The maximum bin (*max_bin*) represents the bin with the highest value after filtering. The offset is a predefined value (typically +1) used to select bins adjacent to the maximum for interpolation.

Two time points are calculated:

$$T_1 = max\_bin + offset$$

$$T_2 = max\_bin + offset + 1.$$

The time points represent the bins after the detected maximum, where the pulse shape is expected to change rapidly. The phase is interpolated in the boundary region of the maximum.

In embodiments, the second interpolation can follow the formula $PWHist = t(T_1) + \frac{|f(T_1)|}{|f(T_2)| - |f(T_1)|}\left(t(T_2) - t(T_1)\right)$, where $t(T_1)$ and $t(T_2)$ are the time values corresponding to the selected bins, and $f(T_1)$ and $f(T_2)$ are the filtered histogram values at those bins.

The approach allows for a reasonable estimate of the median range even when the standard zero-crossing method fails, such as in cases of merged target clusters. Finally, the phase/bin computation circuit outputs the calculated median phase.

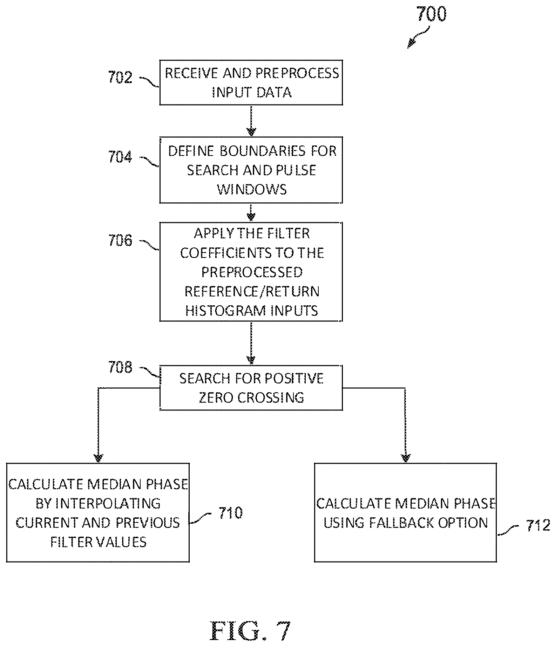

Figure 7 illustrates a flowchart of an embodiment method 700 for on-the-fly median estimation of a potential target using, for example, a lean pulse weighted histogram approach. In embodiments, method 700 is implemented using the phase/bin computation circuit 600. Method 700 represents a median phase calculation that enables efficient time-of-flight data processing without needing a full microcontroller and its associated cost and size constraints.

At step 702, the phase/bin computation circuit 600 receives input data, including the reference/return histogram, crosstalk event histogram, filter coefficients, peak location, and offset parameters. Filter coefficients define the shape of the filter to be applied to the reference/return histogram input. In embodiments, the peak location is provided by the correlator circuit 202 and serves as a starting point for analysis. Offset parameters include search start offset, search end offset, window start offset, and window end offset, which define the processing windows. The reference/return histogram input and the crosstalk event histogram input are similar to those previously discussed and, for the brevity of discussion, are not repeated.

The ambient pad circuit 602 applies ambient padding to the reference/return histogram input when processing extends beyond available data, using the ambient events per bin information. The zero-pad circuit 604 applies zero-padding to the crosstalk histogram input for out-of-range bins.

On-the-fly crosstalk subtraction can be performed on the reference/return histogram data. If the reference/return histogram events are larger than the crosstalk events, subtraction is performed; otherwise, the output is set to zero. A clipping operation can follow to ensure all values remain non-negative. The preprocessing ensures consistent data processing at the edges of the defined windows and isolates the signal of interest from crosstalk effects.

At step 704, the firmware 610 defines the search and pulse windows based on the peak location and offset parameter inputs. The search window, which is typically narrower, is used to locate the median bin within a focused range around the detected peak. The pulse window, generally wider, ensures the capture of the full extent of the pulse for accurate phase calculation. The calculated values define the range of bins that the hardware components will process.

At step 706, the filter MAC circuit 606 performs a filtering operation by applying the filter coefficients to the preprocessed reference/return histogram input by performing a convolution-like operation to enhance relevant pulse information.

When convolved with the histogram data, the filter effectively computes the difference between the sum of four consecutive bins and the sum of the following four consecutive bins. The operation highlights areas of rapid change in the histogram data, corresponding to the rising and falling edges of the pulse. The zero-crossing point of the filtered data (where it transitions from positive to negative) corresponds to the median of the pulse in the original histogram.

Using the filtering approach, the circuit can efficiently detect the pulse median without simultaneously processing the entire histogram, allowing for bin-by-bin processing and reducing memory requirements.

The filter MAC circuit 606 can apply filter coefficients to the preprocessed histogram data, bin by bin, within the defined search and pulse windows. The filtering operation helps isolate and enhance the relevant pulse information from the overall histogram data. The filter coefficients define a filter shape that transitions from positive to negative values, allowing for the detection of zero crossings corresponding to the pulse's median phase. The half-width parameter of the pulse width can be used to generate the filter coefficients, tailoring the filter to match the expected pulse shape and width.

In an embodiment, the filter MAC circuit is a 30-bit circuit that multiplies the 24-bit histogram bin data by the 2-bit signed filter coefficients, accumulating the results over four coefficient values. The approach effectively processes the histogram data to extract timing information for accurate distance measurements while minimizing computational resources.

At step 708, the positive zero crossing detection circuit 608 searches for a positive zero crossing in the filtered data and processes the result. This step effectively combines the zero crossing detection and result storage operations, streamlining the process of identifying the pulse median.

The positive zero crossing detection circuit compares the current and previous output values from the filter MAC circuit 606. In embodiments, when a positive zero crossing is detected, indicating the median of the pulse, the method stores the current and previous filter values, sets the found median flag, and records the median bin location.

The found median flag confirms that a valid pulse median has been identified and that a median phase calculation can proceed to step 710. The median bin output represents the bin number where the positive zero crossing occurred, corresponding to the approximate location of the pulse's median in the histogram. However, if no positive zero crossing is detected by the positive zero crossing detection circuit 608, the method moves to step 712.

At step 710, the firmware 610 calculates the median phase by interpolating the current and previous filter values. The calculation provides a finer resolution than the bin granularity alone.

At step 712, if no positive zero crossing is found (indicating a challenging scenario such as merged targets), a fallback option (i.e., extension) is used to calculate a median phase even when the standard method fails. The approach allows for a reasonable estimate of the median phase even when the standard zero-crossing method fails, such as in cases of merged target clusters.

It is noted that all steps outlined in the flow chart of method 700 are not necessarily required and can be optional. Further, changes to the arrangement of the steps, removal of one or more steps and path connections, and addition of steps and path connections are similarly contemplated.

A first aspect relates to a time-of-flight sensor system, comprising a light emitter configured to emit light pulses towards a target; a detector array configured to detect reflected light pulses from the target; and a histogram processing circuit coupled to the detector array and configured to: receive time-of-flight measurement data from the detector array, process measurement data from the detector array using a sequential bin-by-bin histogram processing, and apply, during the sequential bin-by-bin histogram processing, one or more on-the-fly operations.

In a first implementation form of the time-of-flight sensor system, according to the first aspect as such, the histogram processing circuit comprises a correlator circuit including: an ambient multiply-accumulate (MAC) circuit configured to calculate an ambient light contribution; a filter MAC circuit configured to perform a main correlation operation on the time-of-flight measurement data; and a crosstalk MAC circuit configured to compute a crosstalk contribution, wherein the correlator circuit is configured to process the time-of-flight measurement data in a bin-serial manner.

In a second implementation form of the time-of-flight sensor system, according to the first aspect as such or any preceding implementation form of the first aspect, the correlator circuit further comprises: a closest target circuit coupled to the filter MAC circuit and configured to determine a closest detected target; and a strongest maximum circuit coupled to the filter MAC circuit and configured to identify a peak with a highest signal-to-noise ratio (SNR).

In a third implementation form of the time-of-flight sensor system, according to the first aspect as such or any preceding implementation form of the first aspect, the histogram processing circuit comprises a phase/bin computation circuit including: an ambient pad circuit configured to pad input data with ambient light values in response to the processing extending beyond available time-of-flight measurement data; a zero-pad circuit configured to pad crosstalk data with zeros for out-of-range bins; a filter multiply-accumulate (MAC) circuit configured to apply filter coefficients to preprocessed histogram data within defined search and pulse windows; and a positive zero crossing detection circuit coupled to the filter MAC circuit and configured to detect a positive zero crossing in filtered data output by the filter MAC circuit.

In a fourth implementation form of the time-of-flight sensor system, according to the first aspect as such or any preceding implementation form of the first aspect, the phase/bin computation circuit is further configured to calculate a median phase by interpolating current and previous filter values upon detection of the positive zero crossing.

In a fifth implementation form of the time-of-flight sensor system, according to the first aspect as such or any preceding implementation form of the first aspect, the histogram processing circuit is further configured to: generate a crosstalk histogram using linear interpolation based on crosstalk calibration data and silicon temperature data; and adaptively update crosstalk correction during operation.

In a sixth implementation form of the time-of-flight sensor system, according to the first aspect as such or any preceding implementation form of the first aspect, the histogram processing circuit is configured to process the time-of-flight measurement data using a sliding window of histogram data.

In a seventh implementation form of the time-of-flight sensor system, according to the first aspect as such or any preceding implementation form of the first aspect, the histogram processing circuit is configured to perform full histogram processing capabilities while maintaining low power consumption targets for integration into battery-powered devices.

In an eighth implementation form of the time-of-flight sensor system, according to the first aspect as such or any preceding implementation form of the first aspect, the time-of-flight measurement data comprises histogram data, the histogram data including: a plurality of bins, each bin corresponding to a time delay; and a value in each bin representing a number of photons detected at the corresponding time delay, wherein the histogram data represents a distribution of photon arrival times from the reflected light pulses.

In a ninth implementation form of the time-of-flight sensor system, according to the first aspect as such or any preceding implementation form of the first aspect, applying the one or more on-the-fly operations comprises: removing crosstalk in a pre-defined area of the histogram data; tracking and finding a first peak in the histogram data, and tracking and finding a largest peak in the histogram data.

A second aspect relates to a method for processing time-of-flight sensor data, the method comprising: emitting light pulses towards a target; detecting reflected light pulses from the target; receiving time-of-flight measurement data based on the detected reflected light pulses; processing the time-of-flight measurement data using sequential bin-by-bin histogram processing, wherein the sequential bin-by-bin histogram processing comprises sequentially processing individual bins of a histogram, maintaining a state of a predetermined number of most recently processed bins, and generating output data for each bin before proceeding to a subsequent bin; and applying, during the sequential bin-by-bin histogram processing, one or more on-the-fly operations.

In a first implementation form of the method, according to the second aspect as such, processing the time-of-flight measurement data comprises: calculating, by an ambient multiply-accumulate (MAC) circuit, an ambient light contribution; performing, by a filter MAC circuit, a main correlation operation on the time-of-flight measurement data; and computing, by a crosstalk MAC circuit, a crosstalk contribution, wherein the time-of-flight measurement data is processed in a bin-serial manner.

In a second implementation form of the method, according to the second aspect as such or any preceding implementation form of the second aspect, the method further comprising: determining, by a closest target circuit coupled to the filter MAC circuit, a closest detected target using a closest target circuit coupled to the filter MAC circuit; and identifying, by a strongest maximum circuit coupled to the filter MAC circuit, a peak with a highest signal-to-noise ratio (SNR).

In a third implementation form of the method, according to the second aspect as such or any preceding implementation form of the second aspect, processing the time-of-flight measurement data comprises: padding input data with ambient light values in response to the processing extending beyond available time-of-flight measurement data; padding crosstalk data with zeros for out-of-range bins; applying filter coefficients to preprocessed histogram data within defined search and pulse windows; and detecting a positive zero crossing in filtered data output by applying the filter coefficients.

In a fourth implementation form of the method, according to the second aspect as such or any preceding implementation form of the second aspect, the method further comprising calculating a median phase by interpolating current and previous filter values in response to detecting a positive zero crossing.

In a fifth implementation form of the method, according to the second aspect as such or any preceding implementation form of the second aspect, the method further comprising: generating a crosstalk histogram using linear interpolation based on crosstalk calibration data and silicon temperature data; and adaptively updating crosstalk correction during operation.

In a sixth implementation form of the method, according to the second aspect as such or any preceding implementation form of the second aspect, processing the time-of-flight measurement data comprises using a sliding window of histogram data.

In a seventh implementation form of the method, according to the second aspect as such or any preceding implementation form of the second aspect, the method performs full histogram processing capabilities while maintaining low power consumption targets for integration into battery-powered devices.

In a eighth implementation form of the method, according to the second aspect as such or any preceding implementation form of the second aspect, the time-of-flight measurement data comprises histogram data, the histogram data including: a plurality of bins, each bin corresponding to a time delay; and a value in each bin representing a number of photons detected at the corresponding time delay, wherein the histogram data represents a distribution of photon arrival times from the reflected light pulses.

In a ninth implementation form of the method, according to the second aspect as such or any preceding implementation form of the second aspect, applying the one or more on-the-fly operations comprises: removing crosstalk in a pre-defined area of the histogram data; tracking and finding a first peak in the histogram data, and tracking and finding a largest peak in the histogram data.

A third aspect relates to a correlator circuit for a time-of-flight sensor system configured to process input data in a bin-serial manner, the correlator circuit comprising: an ambient multiply-accumulate (MAC) circuit configured to calculate an ambient light contribution; a filter MAC circuit configured to perform a main correlation operation on input histogram data; a crosstalk MAC circuit configured to compute a crosstalk contribution; a closest target circuit coupled to the filter MAC circuit and configured to determine a closest detected target; and a strongest maximum circuit coupled to the filter MAC circuit and configured to identify a peak with a highest signal-to-noise ratio (SNR).

In a first implementation form of the correlator circuit, according to the third aspect as such, the input histogram data comprises: a plurality of bins, each bin corresponding to a time delay; a value in each bin representing a number of photons detected at the corresponding time delay; and wherein the input histogram data represents a distribution of photon arrival times from reflected light pulses.

In a second implementation form of the correlator circuit, according to the third aspect as such or any preceding implementation form of the third aspect, the ambient MAC circuit, the filter MAC circuit, and the crosstalk MAC circuit are configured to perform multiply-accumulate operations on multi-bit histogram bin values using multi-bit unsigned coefficients.

In a third implementation form of the correlator circuit, according to the third aspect as such or any preceding implementation form of the third aspect, the correlator circuit further comprising a division circuit configured to perform a division operation after each MAC circuit to implement fixed-point arithmetic within a predetermined bit domain.

In a fourth implementation form of the correlator circuit, according to the third aspect as such or any preceding implementation form of the third aspect, the filter MAC circuit is configured to apply filter coefficients to the input histogram data, the filter coefficients defining a filter shape that transitions from positive to negative values to enable detection of zero crossings corresponding to a pulse's median phase.

In a fifth implementation form of the correlator circuit, according to the third aspect as such or any preceding implementation form of the third aspect, the correlator circuit further comprising a signal-to-noise ratio (SNR) calculation circuit configured to calculate an SNR for each bin in the input histogram data.

In a sixth implementation form of the correlator circuit, according to the third aspect as such or any preceding implementation form of the third aspect, the SNR calculation circuit is configured to calculate the SNR based on the equation: $SNR = \frac{corr_{hist} - corr_{amb}}{\sqrt{corr_{hist} + corr_{xtalk}}}$, where $corr_{hist}$ represents a correlation value of the input histogram data, $corr_{amb}$, represents an ambient light contribution, and $corr_{xtalk}$ represents a crosstalk contribution.

In a seventh implementation form of the correlator circuit, according to the third aspect as such or any preceding implementation form of the third aspect, the closest target circuit is configured to analyze an output of the filter MAC circuit bin by bin to identify a first occurrence of a significant signal that exceeds a predetermined threshold.

In an eighth implementation form of the correlator circuit, according to the third aspect as such or any preceding implementation form of the third aspect, the strongest maximum circuit is configured to track a highest SNR value and a corresponding bin location as the correlator circuit processes the input histogram data.

In a ninth implementation form of the correlator circuit, according to the third aspect as such or any preceding implementation form of the third aspect, the correlator circuit further comprising: an ambient pad circuit configured to pad the input histogram data with ambient light values when processing extends beyond available data; and a zero-pad circuit configured to pad crosstalk data with zeros for out-of-range bins.

A fourth aspect relates to a method for processing an input histogram data of a time-of-flight sensor, the method comprising processing the input histogram data in a bin-serial manner, the processing including: calculating an ambient light contribution; performing a main correlation operation on the input histogram data; computing a crosstalk contribution; determining a closest detected target based on results of the main correlation operation; and identifying a peak with a highest signal-to-noise ratio (SNR) based on results of the main correlation operation.

In a first implementation form of the method, according to the fourth aspect as such, the input histogram data comprises: a plurality of bins, each bin corresponding to a time delay; and a value in each bin representing a number of photons detected at the corresponding time delay, wherein the input histogram data represents a distribution of photon arrival times from reflected light pulses.

In a second implementation form of the method, according to the fourth aspect as such or any preceding implementation form of the fourth aspect, calculating the ambient light contribution, performing the main correlation operation, and computing the crosstalk contribution comprises performing multiply-accumulate operations on multi-bit histogram bin values using multi-bit unsigned coefficients.

In a third implementation form of the method, according to the fourth aspect as such or any preceding implementation form of the fourth aspect, the method further comprising performing a division operation after each of the calculating, performing, and computing steps to implement fixed-point arithmetic within a predetermined bit domain.

In a fourth implementation form of the method, according to the fourth aspect as such or any preceding implementation form of the fourth aspect, performing the main correlation operation comprises applying filter coefficients to the input histogram data, the filter coefficients defining a filter shape that transitions from positive to negative values to enable detection of zero crossings corresponding to a pulse's median phase.

In a fifth implementation form of the method, according to the fourth aspect as such or any preceding implementation form of the fourth aspect, the method further comprising calculating a signal-to-noise ratio (SNR) for each bin in the input histogram data.

In a sixth implementation form of the method, according to the fourth aspect as such or any preceding implementation form of the fourth aspect, calculating the SNR comprises based on the equation:

$$SNR = \frac{corr_{hist} - corr_{amb}}{\sqrt{corr_{hist} + corr_{xtalk}}},$$ where $corr_{hist}$ represents a correlation value of the input histogram data, $corr_{amb}$ represents an ambient light contribution, and $corr_{xtalk}$ represents a crosstalk contribution.

In a seventh implementation form of the method, according to the fourth aspect as such or any preceding implementation form of the fourth aspect, determining the closest detected target comprises analyzing the results of the main correlation operation bin by bin to identify a first occurrence of a significant signal that exceeds a predetermined threshold.

In an eighth implementation form of the method, according to the fourth aspect as such or any preceding implementation form of the fourth aspect, identifying the peak with the highest SNR comprises tracking a highest SNR value and a corresponding bin location as the input histogram data is processed.

In a ninth implementation form of the method, according to the fourth aspect as such or any preceding implementation form of the fourth aspect, the method further comprising: padding the input histogram data with ambient light values when processing extends beyond available data; and padding crosstalk data with zeros for out-of-range bins.

A fifth aspect relates to a phase/bin computation circuit for a time-of-flight sensor system, the phase/bin computation circuit comprising: a filter multiply-accumulate (MAC) circuit configured to apply filter coefficients to preprocessed histogram data within defined search and pulse windows; and a positive zero crossing detection circuit coupled to the filter MAC circuit and configured to: detect a positive zero crossing in filtered data output by the filter MAC circuit, store current and previous filter values upon detection of the positive zero crossing, and output a found median flag and a median bin location, wherein the phase/bin computation circuit is configured to: process input data in a bin-serial manner, and calculate a median phase by interpolating a current filter value and a previous filter value.

In a first implementation form of the phase/bin computation circuit, according to the fifth aspect as such, the phase/bin computation circuit further comprising: an ambient pad circuit configured to pad input data with ambient light values when processing extends beyond available data; and a zero-pad circuit configured to pad crosstalk data with zeros for out-of-range bins.

In a second implementation form of the phase/bin computation circuit, according to the fifth aspect as such or any preceding implementation form of the fifth aspect, the filter coefficients are generated based on a half-width parameter of an expected pulse width.

In a third implementation form of the phase/bin computation circuit, according to the fifth aspect as such or any preceding implementation form of the fifth aspect, the filter MAC circuit is configured to perform a convolution operation on the preprocessed histogram data to enhance relevant pulse information.

In a fourth implementation form of the phase/bin computation circuit, according to the fifth aspect as such or any preceding implementation form of the fifth aspect, wherein the phase/bin computation circuit is further configured to calculate an alternative phase estimation in response to failing to detect a positive zero crossing.

In a fifth implementation form of the phase/bin computation circuit, according to the fifth aspect as such or any preceding implementation form of the fifth aspect, the alternative phase estimation comprises: identifying a maximum bin in the filtered data; selecting bins adjacent to the maximum bin for interpolation; and calculating an approximate median phase using the selected bins.

In a sixth implementation form of the phase/bin computation circuit, according to the fifth aspect as such or any preceding implementation form of the fifth aspect, the phase/bin computation circuit is configured to receive input parameters including: a peak location; a search start offset; a search end offset; a window start offset; and a window end offset.

In a seventh implementation form of the phase/bin computation circuit, according to the fifth aspect as such or any preceding implementation form of the fifth aspect, the phase/bin computation circuit is configured to calculate boundaries for search and pulse windows using the received input parameters.

In an eighth implementation form of the phase/bin computation circuit, according to the fifth aspect as such or any preceding implementation form of the fifth aspect, the phase/bin computation circuit is configured to calculate the median phase based on the equation: $Median\ Phase = Median\ Bin + \dfrac{abs(Previous\ Filter\ Value)}{Current\ Filter\ Value - Previous\ Filter\ Value}$,

where *Median Bin* is a bin number where the positive zero crossing is detected, *Previous Filter Value* is a filter output value for the bin immediately before the positive zero crossing, and *Current Filter Value* is a filter output value for the bin where the positive zero crossing is detected.

In a ninth implementation form of the phase/bin computation circuit, according to the fifth aspect as such or any preceding implementation form of the fifth aspect, the phase/bin computation circuit is further configured to: perform on-the-fly subtraction of crosstalk from the preprocessed histogram data; and clip resulting values to ensure they remain non-negative.

A sixth aspect relates to a method for processing time-of- flight sensor data, the method comprising: receiving preprocessed histogram data; applying filter coefficients to the preprocessed histogram data within defined search and pulse windows to generate a filtered histogram data; processing the filtered histogram data in a bin-serial manner; detecting a positive zero crossing in the filtered histogram data; storing current and previous filter values in response to detecting the positive zero crossing; outputting a found median flag and a median bin location; and calculating a median phase by interpolating the current and previous filter values.

In a first implementation form of the method, according to the sixth aspect as such, the method further comprising: padding input data with ambient light values in response to the processing extending beyond available data; and padding crosstalk data with zeros for out-of-range bins.

In a second implementation form of the method, according to the sixth aspect as such or any preceding implementation form of the sixth aspect, the filter coefficients are generated based on a half-width parameter of an expected pulse width.

In a third implementation form of the method, according to the sixth aspect as such or any preceding implementation form of the sixth aspect, applying the filter coefficients comprises performing a convolution operation on the preprocessed histogram data to enhance relevant pulse information.

In a fourth implementation form of the method, according to the sixth aspect as such or any preceding implementation form of the sixth aspect, the method further comprising implementing an alternative phase estimation method when a positive zero crossing is not detected.

In a fifth implementation form of the method, according to the sixth aspect as such or any preceding implementation form of the sixth aspect, the alternative phase estimation method comprises: identifying a maximum bin in the filtered histogram data; selecting bins adjacent to the maximum bin for interpolation; and calculating an approximate median phase using the selected bins.

In a sixth implementation form of the method, according to the sixth aspect as such or any preceding implementation form of the sixth aspect, the method further comprising receiving input parameters including: a peak location; a search start offset; a search end offset; a window start offset; and a window end offset.

In a seventh implementation form of the method, according to the sixth aspect as such or any preceding implementation form of the sixth aspect, the method further comprising calculating boundaries for search and pulse windows using the received input parameters.

In an eighth implementation form of the method, according to the sixth aspect as such or any preceding implementation form of the sixth aspect, calculating the median phase comprises based on the equation:

$Median\ Phase = Median\ Bin + \dfrac{abs(Previous\ Filter\ Value)}{Current\ Filter\ Value - Previous\ Filter\ Value}$, where *Median* Bin is a bin number where the positive zero crossing is detected, *Previous Filter Value* is a filter output value for the bin immediately before the positive zero crossing, and *Current Filter Value* is a filter output value for the bin where the positive zero crossing is detected.

In a ninth implementation form of the method, according to the sixth aspect as such or any preceding implementation form of the sixth aspect, the method further comprising: performing on-the-fly subtraction of crosstalk from the preprocessed histogram data; and clipping resulting values to ensure they remain non-negative.

Example embodiments of the present disclosure are summarized here. Other embodiments can also be understood from the entirety of the specification and the examples.

Example 1: A time-of-flight sensor system, comprising:

a light emitter configured to emit light pulses towards a target;
a detector array configured to detect reflected light pulses from the target; and
a histogram processing circuit coupled to the detector array and configured to:

receive time-of-flight measurement data from the detector array,
process measurement data from the detector array using a sequential bin-by-bin histogram processing, and
apply, during the sequential bin-by-bin histogram processing, one or more on-the-fly operations.

Example 2: The time-of-flight sensor system of example 1, wherein the histogram processing circuit comprises a correlator circuit including:

an ambient multiply-accumulate (MAC) circuit configured to calculate an ambient light contribution;
a filter MAC circuit configured to perform a main correlation operation on the time-of-flight measurement data; and
a crosstalk MAC circuit configured to compute a crosstalk contribution,
wherein the correlator circuit is configured to process the time-of-flight measurement data in a bin-serial manner.

Example 3: The time-of-flight sensor system of example 2, wherein the correlator circuit further comprises:

a closest target circuit coupled to the filter MAC circuit and configured to determine a closest detected target; and
a strongest maximum circuit coupled to the filter MAC circuit and configured to identify a peak with a highest signal-to-noise ratio (SNR).

Example 4: The time-of-flight sensor system of any of examples 1 to 3, wherein the histogram processing circuit comprises a phase/bin computation circuit including:

an ambient pad circuit configured to pad input data with ambient light values in response to the processing extending beyond available time-of-flight measurement data;
a zero-pad circuit configured to pad crosstalk data with zeros for out-of-range bins;
a filter multiply-accumulate (MAC) circuit configured to apply filter coefficients to preprocessed histogram data within defined search and pulse windows; and
a positive zero crossing detection circuit coupled to the filter MAC circuit and configured to detect a positive zero crossing in filtered data output by the filter MAC circuit.

Example 5: The time-of-flight sensor system of example 4, wherein the phase/bin computation circuit is further configured to calculate a median phase by interpolating current and previous filter values upon detection of the positive zero crossing.

Example 6: The time-of-flight sensor system of any of examples 1 to 5, wherein the histogram processing circuit is further configured to:

generate a crosstalk histogram using linear interpolation based on crosstalk calibration data and silicon temperature data; and
adaptively update crosstalk correction during operation.

Example 7: The time-of-flight sensor system of any of examples 1 to 6, wherein the histogram processing circuit is configured to process the time-of-flight measurement data using a sliding window of histogram data.

Example 8: The time-of-flight sensor system of any of examples 1 to 7, wherein the histogram processing circuit is configured to perform full histogram processing capabilities while maintaining low power consumption targets for integration into battery-powered devices.

Example 9: The time-of-flight sensor system of any of examples 1 to 8, wherein the time-of-flight measurement data comprises histogram data, the histogram data including:

a plurality of bins, each bin corresponding to a time delay; and
a value in each bin representing a number of photons detected at the corresponding time delay,
wherein the histogram data represents a distribution of photon arrival times from the reflected light pulses.

Example 10: The time-of-flight sensor system of example 9, wherein applying the one or more on-the-fly operations comprises:

removing crosstalk in a pre-defined area of the histogram data;
tracking and finding a first peak in the histogram data, and
tracking and finding a largest peak in the histogram data.

Example 11: A method for processing time-of-flight sensor data, the method comprising:

emitting light pulses towards a target;
detecting reflected light pulses from the target;
receiving time-of-flight measurement data based on the detected reflected light pulses;
processing the time-of-flight measurement data using sequential bin-by-bin histogram processing, wherein the sequential bin-by-bin histogram processing comprises sequentially processing individual bins of a histogram, maintaining a state of a predetermined number of most recently processed bins, and generating output data for each bin before proceeding to a subsequent bin; and
applying, during the sequential bin-by-bin histogram processing, one or more on-the-fly operations.

Example 12: The method of example 11, wherein processing the time-of-flight measurement data comprises:

calculating, by an ambient multiply-accumulate (MAC) circuit, an ambient light contribution;
performing, by a filter MAC circuit, a main correlation operation on the time-of-flight measurement data; and
computing, by a crosstalk MAC circuit, a crosstalk contribution, wherein the time-of-flight measurement data is processed in a bin-serial manner.

Example 13: The method of example 12, further comprising:

determining, by a closest target circuit coupled to the filter MAC circuit, a closest detected target using a closest target circuit coupled to the filter MAC circuit; and
identifying, by a strongest maximum circuit coupled to the filter MAC circuit, a peak with a highest signal-to-noise ratio (SNR).

Example 14: The method of any of examples 11 to 13, wherein processing the time-of-flight measurement data comprises:

padding input data with ambient light values in response to the processing extending beyond available time-of-flight measurement data;
padding crosstalk data with zeros for out-of-range bins;
applying filter coefficients to preprocessed histogram data within defined search and pulse windows; and
detecting a positive zero crossing in filtered data output by applying the filter coefficients.

Example 15: The method of example 14, further comprising calculating a median phase by interpolating current and previous filter values in response to detecting a positive zero crossing.
Example 16: The method of any of examples 11 to 15, further comprising:

generating a crosstalk histogram using linear interpolation based on crosstalk calibration data and silicon temperature data; and
adaptively updating crosstalk correction during operation.

Example 17: The method of any of examples 11 to 16, wherein processing the time-of-flight measurement data comprises using a sliding window of histogram data.
Example 18: The method of any of examples 11 to 17, wherein applying the one or more on-the-fly operations comprises:

removing crosstalk in a pre-defined area of the histogram data;
tracking and finding a first peak in the histogram data, and
tracking and finding a largest peak in the histogram data.

Example 19: The method of any of examples 11 to 18, wherein the time-of-flight measurement data comprises histogram data, the histogram data including:

a plurality of bins, each bin corresponding to a time delay; and
a value in each bin representing a number of photons detected at the corresponding time delay, wherein the histogram data represents a distribution of photon arrival times from the reflected light pulses.

Example 20: A method for processing time-of-flight sensor data, the method comprising:

receiving time-of-flight measurement data from a detector array, the measurement data representing reflected light pulses from a target; and
processing the time-of-flight measurement data using a histogram processing circuit, wherein the processing comprises:

applying filter coefficients to the time-of-flight measurement data within defined search and pulse windows,
detecting a positive zero crossing in filtered data output by applying the filter coefficients,
storing current and previous filter values upon detection of the positive zero crossing, and
calculating a median phase by interpolating the current and previous filter values, wherein the processing is performed in a bin-serial manner, sequentially processing individual bins of a histogram while maintaining a state of a predetermined number of most recently processed bins.

Although the description has been described in detail, it should be understood that various changes, substitutions, and alterations may be made without departing from the spirit and scope of this disclosure as defined by the appended claims. The same elements are designated with the same reference numbers in the various figures. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

The specification and drawings are, accordingly, to be regarded simply as an illustration of the disclosure as defined by the appended claims, and are contemplated to cover any and all modifications, variations, combinations, or equivalents that fall within the scope of the present disclosure.

## Claims

1. A time-of-flight sensor system, comprising:

a light emitter configured to emit light pulses towards a target;
a detector array configured to detect reflected light pulses from the target; and
a histogram processing circuit coupled to the detector array and configured to:

receive time-of-flight measurement data from the detector array,
process measurement data from the detector array using a sequential bin-by-bin histogram processing, and
apply, during the sequential bin-by-bin histogram processing, one or more on-the-fly operations.

2. A method for processing time-of-flight sensor data, the method comprising:

receiving time-of-flight measurement data based on the detected reflected light pulses;
processing the time-of-flight measurement data, wherein the processing is performed in a bin-serial manner, and comprising sequentially processing individual bins of a histogram while maintaining a state of a predetermined number of most recently processed bins.

3. The method of claim 2, wherein the method comprises:

   emitting light pulses towards a target;
   detecting reflected light pulses from the target;
   processing the time-of-flight measurement data comprising using sequential bin-by-bin histogram processing, wherein the sequential bin-by-bin histogram processing comprises sequentially processing individual bins of a histogram, maintaining a state of a predetermined number of most recently processed bins, and generating output data for each bin before proceeding to a subsequent bin; and
   applying, during the sequential bin-by-bin histogram processing, one or more on-the-fly operations.

4. The method of claim 2, wherein the method comprises:

   receiving time-of-flight measurement data from a detector array; and
   processing the time-of-flight measurement data using a histogram processing circuit, wherein the processing comprises:

   applying filter coefficients to the time-of-flight measurement data within defined search and pulse windows,
   detecting a positive zero crossing in filtered data output by applying the filter coefficients,
   storing current and previous filter values upon detection of the positive zero crossing, and
   calculating a median phase by interpolating the current and previous filter values.

5. The system of claim 1 or the method of claim 3, wherein the histogram processing circuit comprises a correlator circuit including:

   an ambient multiply-accumulate (MAC) circuit configured to calculate an ambient light contribution;
   a filter MAC circuit configured to perform a main correlation operation on the time-of-flight measurement data; and
   a crosstalk MAC circuit configured to compute a crosstalk contribution,
   wherein the correlator circuit is configured to process the time-of-flight measurement data in a bin-serial manner.

6. The system or the method of claim 5, wherein the correlator circuit further comprises:

   a closest target circuit coupled to the filter MAC circuit and configured to determine a closest detected target; and
   a strongest maximum circuit coupled to the filter MAC circuit and configured to identify a peak with a highest signal-to-noise ratio (SNR).

7. The system of any of claims 1, 5 or 6, or the method of any of claims 3, 5 or 6, wherein the histogram processing circuit comprises a phase/bin computation circuit including:

   an ambient pad circuit configured to pad input data with ambient light values in response to the processing extending beyond available time-of-flight measurement data;
   a zero-pad circuit configured to pad crosstalk data with zeros for out-of-range bins;
   a filter multiply-accumulate (MAC) circuit configured to apply filter coefficients to preprocessed histogram data within defined search and pulse windows; and
   a positive zero crossing detection circuit coupled to the filter MAC circuit and configured to detect a positive zero crossing in filtered data output by the filter MAC circuit.

8. The system or the method of claim 7, wherein the phase/bin computation circuit is further configured to calculate a median phase by interpolating current and previous filter values upon detection of the positive zero crossing.

9. The system of any of claims 1, 5 to 8, or the method of any of claims 3, 5 to 8, wherein the histogram processing circuit is further configured to:

   generate a crosstalk histogram using linear interpolation based on crosstalk calibration data and silicon temperature data; and
   adaptively update crosstalk correction during operation.

10. The system of any of claims 1, 5 to 9, or the method of any of claims 3, 5 to 9, wherein the histogram processing circuit is configured to process the time-of-flight measurement data using a sliding window of histogram data.

11. The system of any of claims 1, 5 to 10, wherein the histogram processing circuit is configured to perform full histogram processing capabilities while maintaining low power consumption targets for integration into battery-powered devices.

12. The system of any of claims 1, 5 to 11, or the method of any of claims 3, 5 to 10, wherein the time-of-flight measurement data comprises histogram data, the histogram data including:

a plurality of bins, each bin corresponding to a time delay; and
a value in each bin representing a number of photons detected at the corresponding time delay,
wherein the histogram data represents a distribution of photon arrival times from the reflected light pulses.

13. The system of claim 12, or the method of any of claims 3, 5 to 10 or 12, wherein applying the one or more on-the-fly operations comprises:

removing crosstalk in a pre-defined area of the histogram data;
tracking and finding a first peak in the histogram data, and
tracking and finding a largest peak in the histogram data.

14. The system or the method depending on at least one of the preceding claims, wherein a search window is defined as:

- Search Start = Search Start Offset + Peak Location
- Search End = Search End Offset + Peak Location, or

the pulse window is defined as:

- Pulse Start = Window Start Offset + Peak Location
- Pulse End = Window End Offset + Peak Location, or

the positive zero crossing detection circuit identifies the point where the filtered data transitions from negative to positive.

FIG. 1

FIG. 2

300

```
┌─────────────────────────────────────────────┐
│  A CROSSTALK PULSE SHAPE IS DESCRIBED USING N │
302 │  AMPLITUDE COEFFICIENTS AND M LEAKY FILTER    │
│  COEFFICIENTS                                 │
└─────────────────────────────────────────────┘
                      │
                      ▼
┌─────────────────────────────────────────────┐
│  N COEFFICIENTS DESCRIBE THE MAIN APPROXIMATE │
304 │  REGION OF THE PULSE                          │
└─────────────────────────────────────────────┘
                      │
                      ▼
┌─────────────────────────────────────────────┐
│  M LEAKY FILTER COEFFICIENTS DESCRIBE A       │
│  COMPOSITE LEAKY FILTER, WHICH APPROXIMATES   │
306 │  THE PULSE TAIL AFTER THE MAIN APPROXIMATE    │
│  REGION                                       │
└─────────────────────────────────────────────┘
                      │
                      ▼
┌─────────────────────────────────────────────┐
│  THE CROSSTALK PULSE SHAPE IS CONSTRUCTED FROM│
│  UP TO N VALUES (CENTERED AROUND              │
308 │  PROGRAMMABLE MEDIAN BIN) IN A FIRST LOOKUP   │
│  TABLE AND VALUES ARE COMPUTED USING THE LEAKY│
│  FILTERS DEFINED IN A SECOND LOOKUP TABLE     │
└─────────────────────────────────────────────┘
                      │
                      ▼
┌─────────────────────────────────────────────┐
│  THE GENERATED CROSSTALK PULSE SHAPE IS SCALED│
310 │  BY A CROSSTALK AMPLITUDE SCALAR              │
└─────────────────────────────────────────────┘
                      │
                      ▼
┌─────────────────────────────────────────────┐
│  THE GENERATED AND SCALED CROSSTALK PULSE     │
312 │  SHAPE IS SUBTRACTED FROM THE FIRST REGION OF │
│  THE HISTOGRAM                                │
└─────────────────────────────────────────────┘
```

FIG. 3

FIG. 4

500

502 — RECEIVE AND PREPROCESS INPUT DATA

504 — PERFORM PROCESSING BY MAC CIRCUIT TO GENERATE THE CORR_AMB, CORR_HIST, AND CORR_XTALK OUTPUTS

506 — PERFORM SNR CALCULATIONS

508 — IDENTIFY THE PEAK LOCATION AND SNR VALUE OF THE STRONGEST DETECTED SIGNAL

510 — IDENTIFY START BIN, END BIN, PEAK LOCATION, AND SNR VALUE FOR THE NEAREST DETECTED TARGET

FIG. 5

600

AMB EVENTS PER BIN

FILTER COEFFICIENTS

REF/RETURN HISTOGRAM → AMB PAD 602

CROSSTALK HISTOGRAM → ZERO PAD 604

CLIP < ■

FILTER MAC 606

CORR PREV

POSITIVE ZERO CROSS DETECT 608

PREVIOUS FILTER, CURRENT FILTER, FOUND MEDIAN, AND MEDIAN BIN

FIRMWARE 610

MEDIAN PHASE

PEAK LOCATION, SEARCH AND WINDOW OFFSETS

FIG. 6

700

702 — RECEIVE AND PREPROCESS INPUT DATA

704 — DEFINE BOUNDARIES FOR SEARCH AND PULSE WINDOWS

706 — APPLY THE FILTER COEFFICIENTS TO THE PREPROCESSED REFERENCE/RETURN HISTOGRAM INPUTS

708 — SEARCH FOR POSITIVE ZERO CROSSING

CALCULATE MEDIAN PHASE BY INTERPOLATING CURRENT AND PREVIOUS FILTER VALUES — 710

CALCULATE MEDIAN PHASE USING FALLBACK OPTION — 712

FIG. 7

Europäisches
Patentamt

European
Patent Office

Office européen
des brevets

# EUROPEAN SEARCH REPORT

**Application Number**

EP 25 21 5400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/192337 A1 (ASSMANN ANDREAS [GB]) 13 June 2024 (2024-06-13) | 1-3, 10-12,14 | INV. G01S7/487 |
| Y | * paragraphs [0003], [0026], [0034], [0039], [0042], [0043], [0054], [0068], [0069]; claim 1 * | 4-9,13 | G01S7/4865 G01S17/10 G01S7/497 |
| | ----- | | |
| Y | US 2024/012149 A1 (ASSMANN ANDREAS [GB]) 11 January 2024 (2024-01-11) * paragraphs [0020], [0024] * | 4,8 | |
| | ----- | | |
| Y | US 2022/187431 A1 (MCLEOD STUART [GB] ET AL) 16 June 2022 (2022-06-16) * paragraphs [0081] - [0085]; claims 12,13,16 * | 5-9,13 | |
| | ----- | | |
| A | EP 3 370 080 A1 (ST MICROELECTRONICS GRENOBLE 2 [FR] ET AL.) 5 September 2018 (2018-09-05) * paragraphs [0129] - [0172] * | 1-14 | |
| | ----- | | |
| | | | **TECHNICAL FIELDS SEARCHED (IPC)** |
| | | | G01S |

The present search report has been drawn up for all claims

| Place of search | Date of completion of the search | Examiner |
|---|---|---|
| Munich | 12 March 2026 | Grübl, Alexander |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 21 5400

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2026

| Patent document cited in search report | | Publication date | Patent family member(s) | | Publication date |
|---|---|---|---|---|---|
| US 2024192337 | A1 | 13-06-2024 | CN 118191784 A<br>US 2024192337 A1 | | 14-06-2024<br>13-06-2024 |
| US 2024012149 | A1 | 11-01-2024 | CN 117375576 A<br>US 2024012149 A1<br>US 2025012926 A1 | | 09-01-2024<br>11-01-2024<br>09-01-2025 |
| US 2022187431 | A1 | 16-06-2022 | NONE | | |
| EP 3370080 | A1 | 05-09-2018 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 348600
- US 342965
- US 176163
- US 304589